(19) Europäisches Patentamt
European Patent Office
Office européen des brevets

(11) EP 3 010 857 B1

(12) **FASCICULE DE BREVET EUROPEEN**

(45) Date de publication et mention de la délivrance du brevet:
**02.05.2018 Bulletin 2018/18**

(21) Numéro de dépôt: **14737290.8**

(22) Date de dépôt: **20.06.2014**

(51) Int Cl.:
*C01B 33/44* (2006.01) *C09C 1/28* (2006.01)
*C09C 1/42* (2006.01) *C09C 3/12* (2006.01)

(86) Numéro de dépôt international:
**PCT/FR2014/051553**

(87) Numéro de publication internationale:
**WO 2014/202920 (24.12.2014 Gazette 2014/52)**

(54) **PROCÉDÉ DE PRÉPARATION D'UNE COMPOSITION COMPRENANT DES PARTICULES SILICO/GERMANO-MÉTALLIQUES FONCTIONNALISÉES ET COMPOSITION OBTENUE**

VERFAHREN ZUR HERSTELLUNG EINER ZUSAMMENSETZUNG MIT FUNKTIONALISIERTEN SILICO/GERMANO-METALLTEILCHEN UND GEWONNENE ZUSAMMENSETZUNG

METHOD FOR PREPARING A COMPOSITION COMPRISING FUNCTIONALISED SILICO/GERMANO-METAL PARTICLES AND COMPOSITION OBTAINED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2013 FR 1355964**

(43) Date de publication de la demande:
**27.04.2016 Bulletin 2016/17**

(73) Titulaires:
- **Centre National de la Recherche Scientifique (C.N.R.S.)**
  **75794 Paris Cedex 16 (FR)**
- **Université Paul Sabatier Toulouse III**
  **31400 Toulouse (FR)**

(72) Inventeurs:
- **LE ROUX, Christophe**
  **31090 Avignonet Lauragais (FR)**
- **MICOUD, Pierre**
  **31390 Peyssies (FR)**
- **MARTIN, François**
  **31570 Sainte Foy d'Aigrefeuille (FR)**
- **DUMAS, Angela**
  **31320 Pechabou (FR)**

(74) Mandataire: **Cabinet BARRE LAFORGUE & associés**
**35, rue Lancefoc**
**31000 Toulouse (FR)**

(56) Documents cités:
**WO-A1-2012/085239 WO-A1-2013/004979**
**WO-A1-2013/093339**

- **SALES J A A ET AL: "Some features associated with organosilane groups grafted by the sol-gel process onto synthetic talc-like phyllosilicate", JOURNAL OF COLLOID AND INTERFACE SCIENCE, ACADEMIC PRESS, NEW YORK, NY, US, vol. 297, no. 1, 1 mai 2006 (2006-05-01), pages 95-103, XP024909735, ISSN: 0021-9797, DOI: 10.1016/J.JCIS.2005.10.019 [extrait le 2006-05-01]**
- **CHABROL K ET AL: "Functionalization of synthetic talc-like phyllosilicates by alkoxyorganosilane grafting", JOURNAL OF MATERIALS CHEMISTRY ROYAL SOCIETY OF CHEMISTRY UK, vol. 20, no. 43, 2010, pages 9695-9706, XP002683079, ISSN: 0959-9428**
- **JABER M ET AL: "Heavy metal retention by organoclays: Synthesis, applications, and retention mechanism", CHEMISTRY OF MATERIALS 20051018 AMERICAN CHEMICAL SOCIETY US, vol. 17, no. 21, 18 octobre 2005 (2005-10-18), pages 5275-5281, XP002729833, DOI: 10.1021/CM050754I**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **UKRAINCZYK L ET AL: "TEMPLATE SYNTHESIS AND CHARACTERIZATION OF LAYERED AL- AND MG-SILSESQUIOXANES", JOURNAL OF PHYSICAL CHEMISTRY. B, MATERIALS, SURFACES, INTERFACES AND BIOPHYSICAL, WASHINGTON, DC, US, vol. 101, 1 janvier 1997 (1997-01-01), pages 531-539, XP001118487, ISSN: 1089-5647, DOI: 10.1021/JP962937L**
- **BURKETT S L ET AL: "Synthesis, Characterization, and Reactivity of Layered Inorganic-Organic Nanocomposites Based on 2:1 Trioctahedral Phyllosilicates", CHEMISTRY OF MATERIALS, AMERICAN CHEMICAL SOCIETY, US, vol. 9, 1 janvier 1997 (1997-01-01), pages 1071-1073, XP002238619, ISSN: 0897-4756, DOI: 10.1021/CM9700615**

## Description

L'invention concerne un procédé de préparation d'une composition comprenant des particules minérales silico/germano-métalliques fonctionnalisées par au moins un groupement organique. L'invention concerne également une telle composition comprenant des particules minérales silico/germano-métalliques fonctionnalisées par au moins un groupement organique.

Dans tout le texte, on désigne par "particule minérale silico/germano-métallique" toute particule comprenant au moins un atome de silicium (Si) et/ou au moins un atome de germanium (Ge) et au moins un atome métallique choisi dans le groupe formé des métaux alcalins, des métaux alcalino-terreux et des métaux de transition.

Les particules minérales fonctionnalisées par au moins un groupement organique ou "particules hybrides organiques-inorganiques" présentent un intérêt croissant dans divers domaines de la chimie, notamment dans le domaine de la catalyse, de par leur capacité à combiner certains avantages des composés organiques et des composés inorganiques. La création d'interactions fortes entre des composés organiques et inorganiques permet une immobilisation durable d'espèces organiques sur des composés inorganiques, procurant aux espèces organiques l'ordre structural des composés inorganiques.

Il est connu de fonctionnaliser des phyllosilicates (silicates lamellaires) tels que le talc par greffage d'alcoxyorganosilanes. Cependant, les matériaux hybrides organiques-inorganiques ainsi obtenus ne permettent pas d'atteindre des taux de greffage satisfaisants.

Comme autre alternative à la préparation d'hybrides organiques-inorganiques, on connait également des méthodes de synthèse directe de tels matériaux par voie sol-gel. Cependant, ces matériaux présentent des propriétés cristallines très faibles et des propriétés structurales très éloignées de celles des phyllosilicates naturels ou synthétiques non hybrides. En outre, ces synthèses par voie sol-gel ne peuvent en général pas être réalisées en milieu aqueux.

La publication scientifique intitulée « Some features associated with organosilane groups grafted by the sol-gel process onto synthetic talc-like phyllosilicates » Sales J A A et al., JOURNAL OF COLLOID AND INTERFACE SCIENCE, ACADEMIC PRESS, NEW YORK, NY, US, vol. 297, no. 1, 1 mai 2006, pages 95-103 (XP024909735) décrit par exemple la synthèse d'un silicate de magnésium organique/inorganique à partir de nitrate de magnésium et d'un agent de silylation (3-chloropropyltriméthoxysilane) à température ambiante.

Par ailleurs, WO 2012/085239 décrit un procédé de préparation de particules minérales synthétiques phyllosilicatées dans lequel on réalise un traitement hydrothermal d'un hydrogel précurseur desdites particules minérales synthétiques en présence d'un sel carboxylate.

Dans ce contexte, l'invention vise à proposer un procédé permettant de préparer une composition comprenant des particules minérales synthétiques silico/germano-métalliques hybrides organiques-inorganiques dont les propriétés structurelles sont similaires à celles des phyllosilicates, et notamment du talc.

L'invention vise à proposer un tel procédé dont la mise en oeuvre est simple, rapide, compatible avec les contraintes d'une exploitation industrielle, et ne produisant pas de rejets de composés chimiques polluants.

Pour ce faire, l'invention concerne un procédé selon la revendication 1.

Contre toute attente, les inventeurs ont constaté qu'il est possible de préparer des particules minérales silico/germano-métalliques fonctionnalisées de type hybrides organiques-inorganiques en réalisant un traitement hydrothermal d'un hydrogel précurseur comprenant des particules silico/germano-métalliques fonctionnalisées, c'est-à-dire présentant au moins un groupement organique.

En outre, il est possible de préparer un hydrogel précurseur comprenant des particules silico/germano-métalliques présentant des groupements hydrocarbonés par une simple réaction de précipitation entre :

- un sel métallique et,
- à titre de source de silicium, une source de silicium minérale telle qu'un sel de métasilicate -notamment du métasilicate de sodium $Na_2OSiO_2$, du métasilicate de potassium $K_2OSiO_2$ et du métasilicate d'ammonium $(NH_3)_2OSiO_2$- ou de la silice $SiO_2$, et/ou à titre de source de germanium, une source de germanium minérale telle qu'un sel de métagermanate -notamment du métagermanate de sodium $Na_2OGeO_2$, du métagermanate de potassium $K_2OGeO_2$ et du métagermanate d'ammonium $(NH_3)_2OGeO_2$- et,
- un oxysilane (en particulier un trialcoxysilane ou un trihydroxysilane) et/ou un oxygermane soluble(s) dans l'eau et dans le milieu réactionnel comprenant ledit sel métallique et la source de silicium -notamment le sel de métasilicate et/ou la silice- et/ou la source de germanium -notamment le sel de métagermanate-.

Avantageusement et selon l'invention, ladite réaction de précipitation est réalisée en milieu aqueux. Ainsi, la préparation dudit hydrogel précurseur ne nécessite pas l'utilisation de solvants organiques dangereux pour l'homme ou l'environnement mais peut être réalisée de façon tout à fait avantageuse en milieu aqueux. En particulier, ledit oxysilane et/ou oxygermane utilisé(s) dans un procédé selon l'invention présente(nt) une solubilité totale en milieu aqueux.

Avantageusement et selon l'invention, M est un métal choisi dans le groupe formé du magnésium, du cobalt,

du zinc, du cuivre, du manganèse, du fer, du nickel et du chrome.

Avantageusement et selon l'invention, on réalise le traitement hydrothermal dudit hydrogel précurseur à une température comprise entre 150°C et 300°C, de manière à permettre l'obtention de particules minérales silico/germano-métalliques fonctionnalisées sans altérer le groupement organique porté par l'hydrogel précurseur. En effet, les inventeurs ont constaté avec surprise qu'il est ainsi possible d'obtenir des particules minérales silico/germano-métalliques, d'une part dont les propriétés structurelles et cristallines sont supérieures à celles de l'hydrogel précurseur, et d'autre part, dont les groupements organiques portés par l'hydrogel précurseur sont préservés permettant l'obtention de particules minérales silico/germano-métalliques fonctionnalisées.

En particulier, avantageusement et selon l'invention, on réalise ledit traitement hydrothermal à une température comprise entre 200°C et 260°C, et notamment entre 240°C et 250°C.

Dans tout le texte, on désigne par "traitement hydrothermal sous pression" tout traitement réalisé dans un récipient fermé, tel qu'un autoclave, en présence d'eau, à une température prédéterminée et à une pression supérieure à la pression atmosphérique.

Dans tout le texte, on désigne par "groupement hydrocarboné" tout groupement comprenant des atomes de carbone et d'hydrogène, et éventuellement des hétéroatomes (oxygène, azote, soufre, phosphore...).

En particulier, les particules minérales silico/germano-métalliques fonctionnalisées préparées par un procédé selon l'invention comprennent au moins une liaison chimique de type Si-A, c'est-à-dire qu'au moins une partie des atomes de silicium desdites particules minérales silico/germano-métalliques fonctionnalisées présentent une liaison chimique avec au moins un groupement organique A.

Avantageusement et selon l'invention, on réalise ledit traitement hydrothermal en présence d'au moins un sel carboxylate de formule R8-COOM' dans laquelle :

- M' désigne un métal choisi dans le groupe formé de Na et K, et
- R8 est choisi parmi H et les groupements alkyles comprenant moins de 5 atomes de carbone.

Par ailleurs, la durée du traitement hydrothermal est adaptée pour permettre l'obtention desdites particules minérales, en fonction notamment de la température à laquelle est réalisé le traitement hydrothermal. Avantageusement et selon l'invention, on réalise ledit traitement hydrothermal pendant une durée comprise entre 1 seconde et 30 jours, notamment entre 10 secondes et 24 heures.

Avantageusement et selon l'invention, on réalise le traitement hydrothermal dudit hydrogel dans une enceinte à volume constant, par exemple au moyen d'un autoclave. Il peut par exemple s'agir d'un autoclave formé d'un alliage à base de nickel tel que l'Hastelloy® (commercialisé par Haynes International, Kokomo, Etats-Unis) ou encore d'un autoclave en titane ou éventuellement en acier à chemisage intérieur en polytétrafluoroéthylène (PTFE). Un tel autoclave peut présenter toute contenance, par exemple une contenance allant de 200 mL à 50 L.

Le traitement hydrothermal peut être réalisé avec ou sans agitation mécanique. Dans une variante particulièrement avantageuse d'un procédé selon l'invention, on réalise ledit traitement hydrothermal sous agitation mécanique. A cet effet, on peut par exemple utiliser un autoclave muni d'une hélice métallique interne.

Avantageusement et selon l'invention, on réalise ledit traitement hydrothermal à une pression comprise entre 0,5 MPa (5 bars) et 20 MPa (200 bars). Avantageusement et selon l'invention, on réalise ledit traitement hydrothermal sous pression autogène, c'est-à-dire à une pression au moins égale à la pression de vapeur saturante de l'eau (pression à laquelle la phase vapeur est en équilibre avec la phase liquide). La pression autogène atteinte dans l'autoclave au cours du traitement hydrothermal dépend donc notamment de la température à laquelle on réalise ledit traitement hydrothermal, du volume de l'autoclave et de la quantité d'eau présente. Il est également possible de réaliser le traitement hydrothermal à une pression supérieure à la pression de vapeur saturante de l'eau ou à la pression autogène, dans le récipient dans lequel a lieu le traitement hydrothermal. Pour ce faire, on injecte un gaz chimiquement neutre vis-à-vis de la réaction hydrothermale dans l'autoclave ou le récipient dans lequel a lieu le traitement hydrothermal. Un tel gaz est choisi dans le groupe formé des gaz inertes (gaz rares), en particulier l'argon, du diazote ($N_2$), du dioxyde de carbone et de l'air (air comprimé).

Avantageusement et selon l'invention, on rajoute dans l'autoclave, avec ledit hydrogel précurseur, une quantité d'eau (de préférence de l'eau distillée) au moins suffisante pour créer, à l'intérieur de cet autoclave porté à la température de traitement, une atmosphère de vapeur saturante.

Avantageusement et selon l'invention, ledit hydrogel précurseur a pour formule $((Si_yGe_{1-y})_x((Si_zGe_{1-z})\text{-}A)_{1-x})_4 M_3 O_{11}, n'H_2O$ dans laquelle :

- Si désigne le silicium,
- Ge désigne le germanium,
- x est un nombre réel de l'intervalle [0,25 ; 1[,
- y est un nombre réel de l'intervalle [0 ; 1],

- z est un nombre réel de l'intervalle [0 ; 1],
- M désigne l'atome métallique,
- n' est relatif à un nombre de molécule(s) d'eau associée(s) audit hydrogel.

Les proportions atomiques de silicium et de germanium portant des groupements organiques (z et (1-z)) ou non (y et (1-y)) peuvent être identiques ou différents, en particulier y et z sont de valeurs très proches ou identiques.

Selon une autre formulation, l'hydrogel précurseur comprend :

- entre 0 -borne exclue- et 3 molécules de A,
- 4 atomes de silicium et/ou de germanium d'après la formule chimique suivante : 4 $[(Si_yGe_{1-y})_x((Si_zGe_{1-z})\text{-}A)_{1-x})]$, x étant un nombre réel de l'intervalle [0,25 ; 1[, y étant un nombre réel de l'intervalle [0 ; 1] et z est un nombre réel de l'intervalle [0 ; 1],
- 3 atomes de métal M, M désignant au moins un métal divalent ayant pour formule $Mg_{w(1)}Co_{w(2)}Zn_{w(3)}Cu_{w(4)}Mn_{w(5)}Fe_{w(6)}Ni_{w(7)}Cr_{w(8)}$ dans laquelle chaque w(i) représente un nombre réel de l'intervalle [0 ; 1], et tel que $\sum_{i=1}^{8} w(i) = 1$,
- (10-ε) atomes d'oxygène ((10-ε) O), ε étant un nombre réel de l'intervalle [0 ; 10[,
- (2+ε) groupements hydroxyle ((2+ε) (OH)), ε étant un nombre réel de l'intervalle [0 ; 10[.

L'hydrogel précurseur répond donc à la formule chimique suivante : 4 $[(Si_yGe_{1-y})_x((Si_zGe_{1-z})\text{-}A)_{1-x}]$ (3 M) ((10-ε) O) ((2+ε) (OH)).

Des molécules d'eau peuvent en outre être liées aux particules de cet hydrogel précurseur. Il s'agit de molécules d'eau adsorbées ou physisorbées (associées) aux particules d'hydrogel précurseur et non de molécules d'eau de constitution habituellement présentes dans les espaces interfoliaires de certaines particules phyllosilicatées.

Dans une variante avantageuse d'un procédé selon l'invention, ledit hydrogel précurseur a pour formule $(Si_x(Si\text{-}A)_{1-x})_4M_3O_{11}$, $n'H_2O$ dans laquelle :

- x est un nombre réel de l'intervalle [0,25 ; 1[,
- A est choisi parmi les groupements aliphatiques, les groupements aromatiques et les groupements hydrocarbonés comprenant au moins un hétéroatome,
- M désigne un atome métallique,
- n' est relatif à un nombre de molécule(s) d'eau associée(s) audit hydrogel.

Avantageusement et selon l'invention, le groupement A a pour formule (II) :

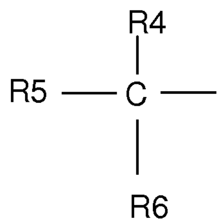

(II),

dans laquelle :

R4, R5 et R6, sont identiques ou différents, et choisis parmi H et les groupements hydrocarbonés comprenant au moins un hétéroatome. En particulier, dans la formule (II), au moins deux des groupements R4, R5 et R6 sont des hydrogènes H et le troisième est choisi parmi un hydrogène H et un groupement hydrocarboné comprenant au moins un hétéroatome.

Avantageusement et selon l'invention, dans la formule (I), A est choisi parmi un méthyle et les groupements hydrocarbonés de formule $Q\text{-}[CH_{2]n}\text{-}$ dans laquelle :

- Q est un groupement comprenant au moins un atome d'azote,
- n est un nombre entier compris entre 3 et 11.

Avantageusement et selon l'invention, n est un nombre entier compris entre 3 et 11, et en particulier entre 3 et 5.

En outre, avantageusement et selon l'invention, Q est choisi parmi $H_2N$- et les groupements hydrosolubles

cycliques cationiques -notamment aromatiques- comprenant au moins un hétéroatome.

Avantageusement et selon l'invention, Q est choisi parmi les groupements comprenant un cation imidazolium ou un cation pyridinium ou un cation ammonium quaternaire.

Avantageusement et selon l'invention, Q est choisi parmi les groupements de formule suivante :

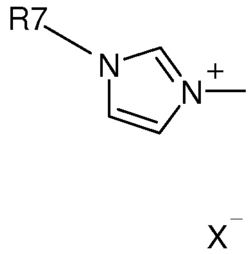

,

dans laquelle :

- R7 est choisi parmi les groupements alkyles linéaires et ramifiés comprenant 1 à 18 atome(s) de carbone,
- $X^-$ est un anion dans lequel X est choisi parmi le chlore, l'iode et le brome.

Avantageusement et selon l'invention, R7 est choisi parmi les groupements alkyles linéaires et ramifiés comprenant 1 à 18 atome(s) de carbone, notamment 1 à 10 atome(s) de carbone et en particulier 1 à 4 atome(s) de carbone.

Avantageusement, A est un groupement cationique. Ainsi, il contribue à conférer un caractère hydrosoluble au composé choisi parmi les oxysilanes et les oxygermanes solubles dans l'eau et ayant pour formule (I).

Plus particulièrement, R1, R2 et R3 représentent chacun des groupements méthyles ($-CH_3$) ou éthyles ($-CH_2-CH_3$). Ainsi, avantageusement et selon l'invention, ledit oxysilane a pour formule :

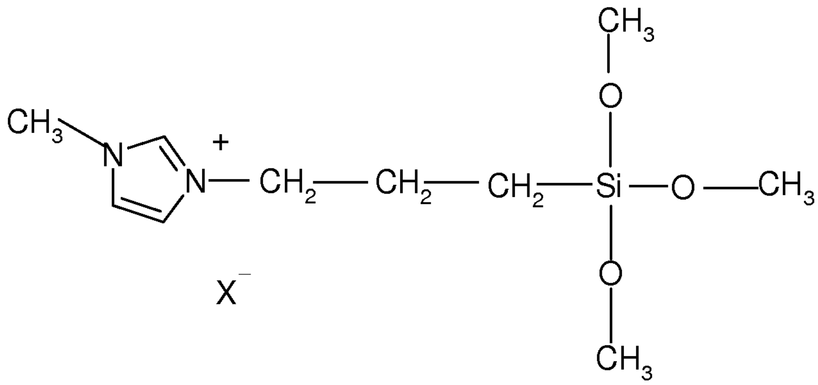

dans laquelle $X^-$ est un anion dans lequel X est choisi parmi le chlore, l'iode et le brome. Dans ce cas, l'oxysilane (un trialcoxysilane) est un sel de 1-(triméthoxy-silyl-propyl)-3-méthyl-imidazolium.

Dans un procédé selon l'invention, on adapte les quantités de sel métallique, de sel de métasilicate et/ou de sel de métagermanate et d'oxysilane et/ou d'oxygermane de façon à former les particules silico/germano-métalliques voulues, la structure des particules silico/germano-métalliques du silicate lamellaire obtenues étant directement contrôlée par le rapport atomique entre le métal M et le silicium et/ou le germanium (M/[Si+Ge]).

Avantageusement et en variante particulière selon l'invention, ledit sel métallique, ledit sel de métasilicate -notamment le métasilicate de sodium- et/ou le sel de métagermanate -notamment le métagermanate de sodium-, et ledit oxysilane et/ou oxygermane sont mis en présence de façon à ce que le rapport atomique entre le métal M et le silicium et/ou le germanium (M/[Si+Ge]) soit sensiblement égal à 0,75. Un tel rapport atomique entre le métal M et le silicium et/ou le germanium correspond au rapport atomique d'un minéral tel que le talc, qui le caractérise, et dans lequel le métal M est le magnésium. De cette façon, on obtient par exemple un hydrogel précurseur comprenant des particules silico/germano-métalliques présentant la stoechiométrie du talc (4 atomes de silicium et/ou de germanium pour 3 atomes de magnésium). En d'autres termes, lesdites particules silico/germano-métalliques de l'hydrogel précurseur (ainsi que les particules minérales silico/germano-métalliques obtenues après traitement hydrothermal) comprennent 4 atomes de silicium et/ou de germanium pour 3 atomes de métal M.

En outre, avantageusement et selon l'invention, le rapport molaire entre l'ensemble des oxysilane et oxygermanane d'une part et l'ensemble des sels de métasilicate -notamment le métasilicate de sodium- et/ou de métagermanate -notamment le métagermanate de sodium- d'autre part est compris entre 0,001 et 3. Le rapport molaire entre les oxysilane et/ou oxygermane et le(s) sel(s) de métasilicate -notamment le métasilicate de sodium- et/ou de métagermanate -notamment le métagermanate de sodium- correspond au nombre de moles d'oxysilane(s) et/ou oxygermane(s) sur le nombre de moles de sel de métasilicate et/ou de sel de métagermanate mis en présence dans le milieu de co-précipitation de l'hydrogel précurseur.

Ainsi, avantageusement et selon l'invention, le pourcentage atomique d'oxysilane/oxygermane par rapport au nombre de mole total de silicium/germanium (sel de métasilicate et/ou sel de métagermanate et oxysilane(s) et/ou oxygermane) est compris entre 0,1 % et 75 %, notamment entre 3 % et 60 % et plus particulièrement entre 5 % et 50 %. De cette façon, on obtient un hydrogel précurseur comprenant des particules silico/germano-métalliques fonctionnalisées, puis une composition comprenant des particules minérales silico/germano-métalliques fonctionnalisées, pouvant présenter des groupements hydrocarbonés en diverses proportions et en particulier pouvant contenir jusqu'à 75 %, notamment jusqu'à 50 %, d'atomes de silicium et/ou de germanium liés de façon covalente à un groupement organique, notamment un groupement de formule A.

Avantageusement et selon l'invention, ledit sel métallique utilisé pour la préparation de l'hydrogel précurseur est choisi parmi les sels métalliques du magnésium, du cobalt, du zinc, du cuivre, du manganèse, du fer, du nickel et/ou du chrome. En particulier, avantageusement et selon l'invention, ledit sel métallique est choisi parmi les chlorures métalliques de formule $MCl_2$ et les acétates métalliques de formule $M(CH_3COO)_2$, (M pouvant être choisi dans le groupe formé du magnésium, du cobalt, du zinc, du cuivre, du manganèse, du fer, du nickel et du chrome) et les sulfates métalliques. Préférentiellement, ledit sel métallique est choisi parmi $MgCl_2$, $CoCl_2$, $ZnCl_2$, $CuCl_2$, $MnCl_2$, $FeCl_2$, $NiCl_2$, $CrCl_2$ et $Mg(CH_3COO)_2$, $Co(CH_3COO)_2$, $Zn(CH_3COO)_2$, $Cu(CH_3COO)_2$, $Mn(CH_3COO)_2$, $Ni(CH_3COO)_2$, $Cr(CH_3COO)_2$ et $MgSO_4$, $CoSO_4$, $ZnSO_4$, $CuSO_4$, $MnSO_4$, $FeSO_4$, $NiSO_4$, $Cr_2(SO_4)_3$.

Avantageusement et selon l'invention, avant ou après la réaction de précipitation de l'hydrogel précurseur et avant ou après le traitement hydrothermal, on réalise un échange au moins partiel de l'anion $X^-$ par au moins une espèce anionique choisie parmi un ion bromure $Br^-$, un ion iodure $I^-$, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$ ou encore un anion nitrite $NO_2^-$. Un tel échange par métathèse permet de moduler à façon le caractère plus ou moins hydrophile ou hydrophobe des particules minérales synthétiques silico/germano-métalliques préparées. L'anion bis-(trifluorométhanesulfonyl)amidure présente par exemple un important caractère hydrophobe.

En particulier, avantageusement et selon l'invention, pour procéder au traitement hydrothermal, l'anion $X^-$ de l'hydrogel précurseur est choisi de façon à ce qu'il présente une dureté (selon la théorie des acides et bases durs et mous ou dureté Pearson) inférieure à la dureté du carboxylate (par exemple de l'ion acétate) éventuellement ajouté avant le traitement hydrothermal.

Avantageusement et selon l'invention, dans le cas où on utilise un trialcoxysilane, on peut également procéder à un tel échange au moins partiel dès le début, c'est-à-dire avant de réaliser ladite réaction de co-précipitation en ajoutant un tel anion dans le milieu de co-précipitation de départ.

Avantageusement et selon l'invention, on ajoute, dans le milieu réactionnel de co-précipitation, au moins un acide choisi parmi l'acide chlorhydrique (HCl), l'acide acétique ($CH_3COOH$) et l'acide sulfurique ($H_2SO_4$), le nombre total de moles d'ions chlorure et d'ions acétate étant égal au nombre de moles de sodium Na dans ledit milieu réactionnel de co-précipitation.

Dans une variante de réalisation selon l'invention, on réalise ladite réaction de co-précipitation de l'hydrogel en présence d'un sel additionnel, notamment un sel de même nature chimique que le(s) sel(s) présent(s) dans le milieu de co-précipitation de l'hydrogel, après précipitation d'au moins une partie dudit hydrogel. Ainsi, on ajoute par exemple dans le milieu réactionnel de co-précipitation de l'hydrogel, du chlorure de sodium (NaCl) ou encore un sel carboxylate de formule R8-COOM' dans laquelle :

- M' désigne un métal choisi dans le groupe formé de Na et K, et
- R8 est choisi parmi H et les groupements alkyles comprenant moins de 5 atomes de carbone.

La présence d'au moins un tel sel additionnel permet de favoriser la réaction de co-précipitation de l'hydrogel précurseur, notamment lorsque la concentration en oxysilane est importante (c'est-à-dire lorsque x est inférieur à 0,75 et plus particulièrement inférieur à 0,50) et améliore l'organisation atomique de l'hydrogel précurseur.

Avantageusement et selon l'invention, la concentration en sel(s) additionnel(s) dans le milieu réactionnel de co-précipitation de l'hydrogel précurseur est inférieure à 5 mol/L, par exemple comprise entre 0,2 mol/L et 4 mol/L.

Avantageusement et selon l'invention, on réalise le traitement hydrothermal avec un hydrogel précurseur, liquéfié ayant un rapport liquide/solide compris entre 2 et 20, notamment entre 5 et 15 (la quantité de liquide étant exprimée en $cm^3$, et la quantité de solide, en grammes, et désignant la quantité d'hydrogel sec uniquement, c'est-à-dire

sans prendre en compte le(s) sel(s) carboxylate). Eventuellement, si nécessaire, on rajoute audit hydrogel précurseur liquéfié une quantité d'eau appropriée pour atteindre ce rapport.

Avantageusement et selon l'invention, au terme d'un traitement hydrothermal dudit hydrogel précurseur, on obtient une composition se présentant sous la forme d'une suspension renfermant des particules minérales silico/germano-métalliques.

Avantageusement et selon l'invention, à l'issue du traitement hydrothermal, on récupère une composition comprenant des particules minérales silico/germano-métalliques fonctionnalisées en suspension dans une solution aqueuse de sel(s) carboxylate. Ladite composition peut ensuite être soumise à une étape de séchage, après une éventuelle étape de lavage à l'eau de façon à éliminer au moins en partie le(s)dit(s) éventuel(s) sel(s) carboxylate. Une telle étape de lavage comprend par exemple au moins un cycle de lavage/centrifugation de ladite composition.

Ladite composition comprenant des particules minérales obtenue par un procédé selon l'invention peut en outre être séchée par toute technique de séchage de poudre. Le séchage peut également être réalisé au moyen d'une étuve, par exemple à une température comprise entre 60°C et 130°C, pendant 1 heure à 48 heures, par lyophilisation, sous irradiation de micro-ondes, ou encore par atomisation.

L'invention s'étend à une composition susceptible d'être obtenue par un procédé selon l'invention.

L'invention concerne donc également une composition comprenant des particules minérales silico/germano-métalliques fonctionnalisées dont 1 % à 75 %, notamment 17 % à 75 %, en particulier 20 % à 60 %, des atomes de silicium et/ou des atomes de germanium sont liés de façon covalente à au moins un groupement organique. Cette proportion de groupement organique est de préférence mesurée par analyse élémentaire.

L'invention concerne donc une composition selon la revendication 11. Une composition selon l'invention comprend des particules minérales silico/germano-métalliques fonctionnalisées dont 1 % à 75 %, notamment 17 % à 75 %, en particulier 20 % à 60 %, des atomes de silicium et/ou des atomes de germanium sont liés de façon covalente à au moins un groupement organique.

Avantageusement et selon l'invention, A est choisi dans le groupe formé des groupements hydrocarbonés cationiques comprenant au moins un hétéroatome.

Avantageusement et selon l'invention, A désigne un groupement choisi dans le groupe formé des groupements organiques cationiques hétéro-aromatiques.

Avantageusement et selon l'invention, Q est choisi dans le groupe formé des groupements organiques cationiques hétéro-aromatiques comprenant au moins un cation imidazolium.

Avantageusement et selon l'invention, Q est un groupement comprenant au moins un cation imidazolium et de formule (III) ci-après :

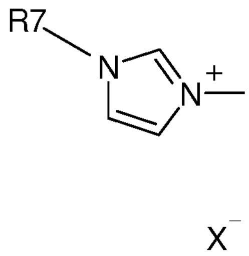

(III),

dans laquelle :

- R7 est choisi parmi les alkyles linéaires et ramifiés comprenant 1 à 18 atome(s) de carbone,
- $X^-$ est un anion choisi parmi un anion chlorure, un anion iodure, un anion bromure, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$ ou encore un anion nitrite $NO_2^-$.

En particulier, avantageusement et selon l'invention, dans la formule $((Si_yGe_{1-y})_x((Si_zGe_{1-z})\text{-}A)_{1-x})_4M_3O_{10}(OH)_2$, M est un métal choisi dans le groupe formé du magnésium, du cobalt, du zinc, du cuivre, du manganèse, du fer, du nickel et du chrome.

Avantageusement, une composition selon l'invention présente, en diffraction des rayons X, une raie de diffraction caractéristique d'un plan (001), notamment une unique raie de diffraction caractéristique d'un plan (001), située à une distance comprise entre 10 Å et 25 Å. En effet, les inventeurs ont constaté que la raie de diffraction caractéristique du plan (001) est déplacée vers les plus grandes distances par rapport à la raie de diffraction de particules silico/germano-métalliques non fonctionnalisées. Ce déplacement serait dû à la présence du groupement organique lié dans les espaces

interfoliaires des particules minérales silico/germano-métalliques, les groupements organiques étant liés de façon covalente aux atomes de silicium et/ou de germanium dans l'ensemble de la structure et entrainant une augmentation de la distance interfoliaire des particules.

Avantageusement et selon l'invention, les particules minérales silico/germano-métalliques fonctionnalisées présentent une taille moyenne inférieure à 300 nm, notamment inférieure à 200 nm.

Avantageusement et en variante, une composition selon l'invention comprend des particules minérales silico-métalliques fonctionnalisées ayant pour formule $(Si_x(Si\text{-}A)_{1-x})_4M_3O_{10}(OH)_2$.

Selon une variante particulièrement avantageuse d'une composition selon l'invention, le groupement A a pour formule :

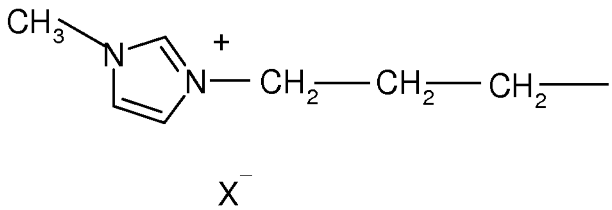

.

Avantageusement et selon l'invention, une composition selon l'invention comprenant des particules minérales silico/germano-métalliques fonctionnalisées par au moins un groupement organique, présente, en diffraction des rayons X, des raies de diffraction caractéristiques suivantes :

- un plan (001) situé à une distance comprise entre 10 Å et 25 Å;
- un plan (020) situé à une distance comprise entre 4,45 Å et 4,60 Å;
- un plan (060) situé à une distance comprise entre 1,51 Å et 1,53 Å.

L'invention concerne en outre un procédé et une composition caractérisés en combinaison par tout ou partie des caractéristiques mentionnées ci-dessus ou ci-après.

D'autres buts, avantages et caractéristiques de l'invention apparaissent à la lecture de la description et des exemples qui suivent.

A/ - PROTOCOLE GENERAL DE PRÉPARATION D'UNE COMPOSITION COMPRENANT DES PARTICULES MINÉRALES SYNTHÉTIQUES SILICO/GERMANO-MÉTALLIQUES FONCTIONNALISÉES SELON L'INVENTION

1/ - Préparation d'un hydrogel précurseur comprenant des particules synthétiques silico/germano-métalliques

Un tel hydrogel précurseur comprenant des particules silico/germano-métalliques peut être préparé par une réaction de co-précipitation en milieu aqueux impliquant, à titre de réactifs :

- au moins un sel d'un métal M choisi dans le groupe formé du magnésium, du cobalt, du zinc, du cuivre, du manganèse, du fer, du nickel et du chrome,
- une source de silicium et/ou de germanium telle que du métasilicate de sodium $Na_2OSiO_2$, du métagermanate de sodium $Na_2OGeO_2$ ou encore de la silice $SiO_2$, et
- au moins un composé choisi parmi les oxysilanes et les oxygermanes, lesdits oxysilanes et oxygermanes étant solubles dans l'eau et ayant pour formule (I) :

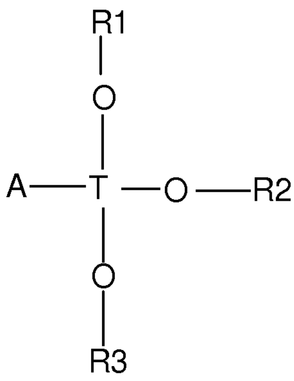

(I),

dans laquelle :

- T est choisi parmi le silicium et le germanium,
- A est choisi parmi les groupements aliphatiques, les groupements aromatiques et les groupements hydrocarbonés comprenant au moins un hétéroatome. A désigne notamment un groupement choisi parmi un méthyle et les groupements hydrocarbonés comprenant au moins un hétéroatome,
- R1, R2 et R3, sont identiques ou différents, et choisis parmi un hydrogène et les groupements alkyles linéaires comprenant 1 à 3 atome(s) de carbone.

En particulier, ledit oxysilane peut être un trialcoxysilane soluble en milieu aqueux et de formule suivante :

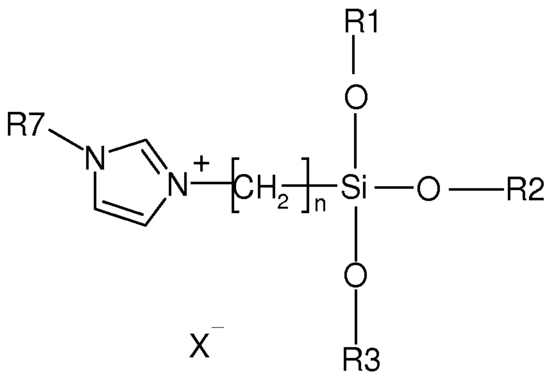

dans laquelle :

- R1, R2 et R3, sont identiques ou différents, et choisis parmi H et les groupements alkyles linéaires comprenant 1 à 3 atome(s) de carbone,
- R7 est choisi parmi les groupements alkyles linéaires et ramifiés comprenant 1 à 18 atome(s) de carbone,
- n est un nombre entier compris entre 3 et 11, et
- $X^-$ est un anion dans lequel X est choisi parmi le chlore, l'iode et le brome.

Cette réaction de coprécipitation entre le(s) sel(s) du(/des) métal(/métaux) M, le métasilicate et/ou le métagermanate de sodium et l'oxysilane (trihydroxysilane ou trialcoxysilane) hydrosoluble est mise en oeuvre de façon à ce que le rapport atomique entre le métal M, et, le silicium et/ou le germanium corresponde à la structure du silicate lamellaire dont l'obtention est recherchée. En particulier, pour l'obtention de particules silico/germano-métalliques ayant la stoechiométrie du talc, ce rapport atomique estsensiblement égal à 0,75. La réaction de coprécipitation permet dans ce cas d'obtenir une composition comprenant des particules silico/germano-métalliques ayant la stoechiométrie du talc (4 atomes de silicium (Si) et/ou de germanium pour 3 atomes du métal M).

Cette réaction est mise en oeuvre à partir de :

1. une solution aqueuse d'oxysilane fonctionnalisé et de métasilicate et/ou de métagermanate de sodium, et
2. une solution de sel(s) de métal(/métaux), préparée avec un ou plusieurs sel(s) de métal (ou de métaux) dans une solution d'acide chlorhydrique ou d'acide acétique ou d'acide sulfurique.

L'acide chlorhydrique HCl et/ou l'acide acétique et/ou l'acide sulfurique est/sont ajouté(s) dans le milieu réactionnel de co-précipitation de façon à ce que le nombre total de moles d'ions chlorure et/ou d'ions acétate et/ou d'ions sulfate (provenant de l'acide chlorhydrique et/ou acétique et/ou sulfurique et du/des sel(s) métallique(s)) ajoutés soit égal au nombre de moles de sodium Na (provenant du métasilicate de sodium).

La préparation de cette composition comprenant des particules minérales synthétiques silico/germano-métalliques est réalisée en suivant le protocole suivant :

1. on mélange les solutions de sel(s) de métal (ou de métaux) avec la solution d'oxysilane et de métasilicate et/ou de métagermanate de sodium ; un hydrogel précurseur de co-précipitation se forme rapidement,
2. on agite le gel (par exemple pendant 5 minutes),
3. on récupère l'hydrogel précurseur après centrifugation (entre 2000 et 10 000 tours par minute, pendant 3 à 20 minutes, par exemple 3500 tours/min pendant 5 minutes) et élimination du surnageant,
4. on lave l'hydrogel précurseur avec de l'eau distillée ou osmosée, en effectuant au moins deux cycles de lavage/centrifugation,
5. on récupère l'hydrogel précurseur après centrifugation,
6. éventuellement, on sèche l'hydrogel précurseur récupéré après centrifugation par exemple par lyophilisation et/ou séchage à l'étuve, par séchage sous irradiation de micro-ondes ou encore par atomisation.

En outre, il est par exemple possible d'ajouter à la solution de métasilicate de sodium et/ou de métagermanate de sodium, au moins un sel additionnel tel que du chlorure de sodium NaCl ou encore de l'acétate de sodium $CH_3COONa$ (hydraté ou non). La présence d'un tel sel permet de favoriser la réaction de co-précipitation de l'hydrogel précurseur, notamment lorsque la concentration en oxysilane est importante, et d'obtenir un hydrogel précurseur présentant des propriétés améliorées. Le(s)dit(s) sel(s) peu(ven)t être ajouté(s) de façon à ce que leur concentration dans le milieu réactionnel de co-précipitation de l'hydrogel soit par exemple comprise entre 0,2 mol/L et 4 mol/L.

A l'issue de cette première phase de précipitation, on obtient un hydrogel précurseur comprenant des particules synthétiques silico/germano-métalliques présentant des groupements hydrocarbonés (ou "hydrogel hybride organique-inorganique ").

2/ - Echange de $X^-$ par un autre anion

La composition obtenue après séchage ou non de l'hydrogel précurseur comprenant des particules silico/germano-métalliques tel qu'obtenu précédemment peut être ajoutée à une solution aqueuse comprenant par exemple un ion bromure $Br^-$, un ion iodure $I^-$, un ion chlorure, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$ ou encore un anion nitrite $NO_2^-$. La concentration en un de ces anions dans une telle solution est comprise entre 0,1 $mol.L^{-1}$ et la limite de solubilité de l'espèce chimique, notamment entre 0,2 $mol.L^{-1}$ et 3 $mol.L^{-1}$, en particulier entre 0,3 $mol.L^{-1}$ et 1,5 $mol.L^{-1}$, par exemple 0,5 $mol.L^{-1}$. Un tel échange par métathèse permet de moduler à façon le caractère plus ou moins hydrophile ou hydrophobe des particules silico/germano-métalliques préparées, l'anion bis(trifluorométhanesulfonyl)amidure étant par exemple fortement hydrophobe.

Avant de procéder au traitement hydrothermal, on veille en particulier à ce que l'anion $X^-$ présente une dureté inférieure à la dureté du carboxylate (par exemple de l'ion acétate) éventuellement ajouté avant le traitement hydrothermal.

3/ - Traitement hydrothermal de l'hydrogel

L'hydrogel silico/germano-métallique $((Si_yGe_{1-y})_x((Si_zGe_{1-z})\text{-}A)_{1-x})_4M_3O_{11}$, $n'H_2O$ séché ou non, tel que précédemment obtenu, est soumis à un traitement hydrothermal, à une température comprise entre 150°C et 300°C.

Pour ce faire :

1. on place l'hydrogel, tel qu'obtenu après précipitation (le cas échéant, en suspension avec le(s) sel(s) carboxylate de formule R8-COOM') ou préalablement séché, dans un réacteur/autoclave ;
2. si besoin, on ajoute sous agitation une solution aqueuse comprenant au moins un sel carboxylate de formule R8-COOM' (sous une forme hydratée ou anhydre) audit hydrogel précurseur,
3. on ajuste éventuellement le rapport liquide/solide à une valeur comprise entre 2 et 20, notamment entre 5 et 15 (la quantité de liquide étant exprimée en $cm^3$, et la quantité de solide, en grammes, et désignant la quantité d'hydrogel sec uniquement, c'est-à-dire sans prendre en compte le(s) sel(s) carboxylate,
4. on place le réacteur/autoclave à l'intérieur d'un four ou d'une étuve, à une température de réaction prédéterminée (établie entre 150°C et 280°C), pendant toute la durée du traitement.

Au cours du traitement hydrothermal, l'hydrogel précurseur acquiert progressivement une consistance gélatineuse. La composition comprenant des particules minérales silico/germano-métalliques fonctionnalisées obtenue à l'issue du traitement hydrothermal présente une cristallinité observable en diffraction des rayons X, cette cristallinité augmentant avec la durée du traitement hydrothermal et se traduisant sur les diffractogrammes correspondants par l'apparition rapide de raies caractéristiques qui s'affinent et s'intensifient rapidement au cours du traitement hydrothermal.

A l'issue de ce traitement hydrothermal, on obtient par exemple une composition talqueuse comprenant des particules minérales de formule $((Si_yGe_{1-y})_x((Si_zGe_{1-z})\text{-}A)_{1-x})_4\ M_3O_{10}(OH)_2$ en suspension dans une solution aqueuse, en particulier une solution aqueuse de sel(s) carboxylate.

Au terme de ce traitement hydrothermal, la composition contenue dans le réacteur est récupérée par centrifugation (entre 3 000 et 15 000 tours par minute, pendant 5 à 60 minutes) puis élimination du surnageant. La solution surnageante contient le(s) éventuel(s) sel(s) de formule R8-COOM' et peut être conservée en vue de récupérer ce(s) sel(s) carboxylate(s) et de le(s) recycler.

La composition comprenant des particules minérales silico/germano-métalliques fonctionnalisées récupérée est ensuite, de préférence, lavée avec de l'eau, en particulier avec de l'eau distillée ou osmosée, en effectuant au moins deux cycles de lavage/centrifugation.

La composition comprenant des particules minérales silico/germano-métalliques fonctionnalisées récupérée après la dernière centrifugation peut ensuite être séchée :

- à l'étuve à une température comprise entre 60°C et 130°C, pendant 1 à 24 heures, ou encore,
- par lyophilisation, par exemple dans un lyophilisateur de type CHRIST ALPHA® 1-2 LD Plus, pendant 48 heures à 72 heures,
- ou encore par atomisation.

Les inventeurs ont ainsi pu noter que le traitement hydrothermal dudit hydrogel précurseur fonctionnalisé est possible et qu'il permet des particules minérales silico/germano-métalliques dont les propriétés structurelles et cristallines sont supérieures à celles de l'hydrogel précurseur, mais également, dont les groupements organiques portés par l'hydrogel précurseur sont préservés au cours du traitement hydrothermal.

B/ - ANALYSE ET CARACTERISATION STRUCTURELLE

Les résultats d'analyse d'une composition obtenue en suivant le protocole précédemment exposé sont ci-après rapportés. Ces résultats confirment que l'invention permet effectivement d'aboutir à la formation de particules minérales hybrides organiques-inorganiques présentant des caractéristiques structurelles (notamment en termes de lamellarité et de cristallinité) très similaires à celles des phyllosilicates non fonctionnalisés et en particulier de talcs non fonctionnalisés.

Les phyllosilicates sont constitués par un empilement irrégulier de feuillets élémentaires de structure cristalline, dont le nombre varie de quelques unités à quelques milliers d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2:1, dont font notamment partie les smectites. Au vu de leur structure, les phyllosilicates 2:1 sont également qualifiées de type T.O.T. (tétraèdre-octaèdre-tétraèdre).

La couche octaédrique des phyllosilicates 2:1 est formée de deux plans d'ions $O^{2-}$ et $OH^-$ (dans la proportion molaire $O^{2-}/OH^-$ de 2/1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires. Dans les smectites naturelles, par exemple, une faible proportion des sites octaédriques et/ou tétraédriques des smectites n'est pas occupée et est responsable d'un déficit cationique du réseau cristallin formant les feuillets élémentaires.

Les analyses ont notamment été réalisées par diffraction des rayons X et par Résonance Magnétique Nucléaire (RMN) du solide.

Les données recueillies sont présentées aux figures annexées et dans les exemples commentées ci-après.

En diffraction des rayons X (DRX), un talc naturel tel qu'un talc provenant de la mine d'ARNOLD (Etat de New-York, USA), est connu pour présenter les raies de diffraction caractéristiques suivantes (d'après la publication de Ross M., Smith W.L. et Ashton W.H., 1968, "Triclinic talc and associated amphiboles from Gouverneur mining district, New York ; American Mineralogist", volume 53, pages 751-769) :

- pour le plan (001), une raie située à une distance de 9,34 Å ;
- pour le plan (002), une raie située à une distance de 4,68 Å ;
- pour le plan (020), une raie située à une distance de 4,56 Å ;
- pour le plan (003), une raie située à une distance de 3,115 Å ;

- pour le plan (060), une raie située à une distance de 1,52 Å.

Les figures 1, 5 et 6 présentent des diffractogrammes RX sur chacun desquels est représentée l'intensité relative du signal (nombre de coups par seconde) en fonction de la distance inter-réticulaire en Angstroem.
Les figures 2 et 7 représentent des spectres en RMN du proton de compositions obtenues par un procédé selon l'invention, réalisés à l'aide d'un spectromètre BRUKER® Avance 400®.
Les figures 3 et 8 représentent des spectres en RMN du carbone de compositions obtenues par un procédé selon l'invention, réalisés à l'aide d'un spectromètre BRUKER® Avance 400®.
Les figures 4 et 9 représentent des spectres en RMN du silicium de compositions obtenues par un procédé selon l'invention, réalisés à l'aide d'un spectromètre BRUKER® Avance 400®.

EXEMPLE 1 :

On prépare un hydrogel fonctionnalisé :
On prépare d'une part une solution d'acétate de magnésium en ajoutant 16,97 g d'acétate de magnésium tétrahydraté ($Mg(CH_3COO)_2$, $4H_2O$), dans 52,74 mL d'acide acétique $CH_3COOH$ à 1 mol/L.
D'autre part, on prépare une solution d'alcoxysilane fonctionnalisé et de métasilicate de sodium :
Une solution de métasilicate de sodium est d'abord préparée en ajoutant 17,86 g de métasilicate de sodium pentahydraté dans 150 mL d'eau distillée. La solution est légèrement chauffée jusqu'à 40°C pour améliorer la dissolution.
Une solution d'alcoxysilane fonctionnalisé est préparée en ajoutant 6,796 g de chlorure de 1-(triméthoxy-silyl-propyl)-3-butyl-imidazolium dans 50 mL d'eau distillée.
Le chlorure de 1-(triméthoxy-silyl-propyl)-3-butyl-imidazolium a pour formule chimique la formule suivante :

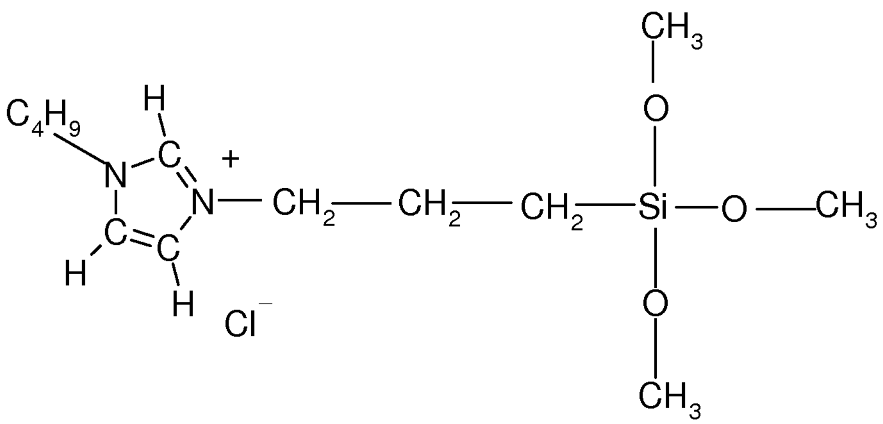

On y ajoute ensuite sous agitation magnétique une solution contenant 3,155 g d'iodure de sodium NaI dans 10 mL d'eau distillée, de façon à réaliser un échange entre les ions chlorure $Cl^-$ et iodure $I^-$. On maintient la solution d'alcoxysilane fonctionnalisé avec l'iodure de sodium NaI sous agitation magnétique pendant 1 minute.
La solution d'alcoxysilane fonctionnalisé ainsi préparée est alors entièrement ajoutée sous agitation magnétique à la solution de métasilicate de sodium précédemment préparée. Finalement, on ajoute sous agitation magnétique la solution d'acétate de magnésium à la solution contenant l'alcoxysilane fonctionnalisé et le métasilicate de sodium. Un gel silico-métallique se forme instantanément. Ce gel silico-métallique est agité pendant 5 minutes puis centrifugé pendant 5 minutes à 3500 tours/min. Il est ensuite lavé trois fois par ajout de 100 mL d'eau distillée et centrifugation (5 minutes à 3500 tours/min) de façon à éliminer les sels formés au cours de la précipitation.
Le gel silico-métallique récupéré est ensuite séché par lyophilisation à -50°C sous 0,064 mbar. Après séchage par lyophilisation, une poudre blanche est récupérée. On récupère alors 19,03 g d'une composition comprenant des particules minérales synthétiques fonctionnalisées.
On réalise ensuite un traitement hydrothermal de l'hydrogel ainsi préparé et obtenu à une température de 243°C pendant 6 heures (durée ne tenant pas compte de la durée de montée en température). Le traitement hydrothermal est réalisé en présence d'une concentration en acétate de sodium de 4 mol/L de façon à accélérer la réaction de transformation des particules d'hydrogel en particules talqueuses hybrides organiques-inorganiques.
Pour ce faire, on place la suspension d'hydrogel précédemment obtenue directement dans un réacteur en titane clos. Le réacteur en titane est alors disposé dans un four à la température de 243°C pendant 6 heures.
Après refroidissement jusqu'à la température ambiante, le réacteur est ouvert et la suspension obtenue est centrifugée. Après centrifugation, on récupère d'une part une composition talqueuse hybride organique-inorganique, et

d'autre part, une solution surnageante comprenant notamment de l'acétate de sodium, ce dernier pouvant alors être récupéré et éventuellement recyclé.

On soumet ensuite la composition talqueuse hybride récupérée à deux cycles successifs de lavage à l'eau déminéralisée et centrifugation.

La composition talqueuse récupérée après centrifugation est finalement séchée à l'étuve à 60°C pendant 12 h.

Dans les particules de talc hybride organique-inorganique de la composition ainsi préparée, 20 % des atomes de silicium sont porteurs d'un groupement propyl-3-butyl-imidazolium.

Le diffractogramme des rayons X de la composition de talc hybride ainsi obtenue est représenté sur la figure 1. Le diffractogramme des rayons X de cette composition talqueuse présente des raies de diffraction correspondant aux raies de diffraction d'un phyllosilicate fonctionnalisé, et en particulier les raies de diffraction caractéristiques suivantes :

- un plan (001) situé à une distance de 13,461 Å (I =100) ;
- un plan (020) situé à une distance de 4,542 Å (I =86);
- un plan (003) situé à une distance de 3,358 Å (I =62);
- un plan (060) situé à une distance de 1,526 Å (I =47).

Le spectre de RMN du proton (figure 2) des particules minérales hybrides permet d'identifier la présence des H des groupements Mg(OH) des feuillets de talc (déplacements chimiques compris entre 0 et 1 ppm), des groupements $CH_2$-Si (déplacements chimiques compris entre 0,5 ppm et 1 ppm), les H du cycle de l'imidazolium (déplacements chimiques compris entre 6 ppm et 9 ppm), les H des groupements Si-OH et/ou $CH_2$-C (déplacements chimiques compris entre 1 et 3 ppm) et les H des $CH_2$ directement voisin du groupement imidazolium et/ou de l'eau (déplacements chimiques compris entre 3 et 5 ppm).

Le spectre de RMN du carbone (figure 3) des particules minérales hybrides permet d'identifier la présence d'un groupement imidazolium (déplacements chimiques compris entre 115 ppm et 140 ppm) ainsi que la présence d'un groupement butyle et de groupements méthylène (déplacements chimiques compris entre 0 ppm et 60 ppm, dont le méthylène de la liaison $CH_2$-Si entre 9 ppm et 10 ppm).

Le spectre de RMN du silicium (figure 4) des particules minérales hybrides permet d'identifier la présence de groupements Si-O-Si (déplacements chimiques compris entre -80 ppm et -100 ppm).

EXEMPLE 2 :

On prépare un hydrogel fonctionnalisé conforme à celui préparé à l'exemple 1.

On réalise ensuite un traitement hydrothermal de l'hydrogel ainsi préparé et obtenu à une température de 243°C pendant 6 heures (durée ne tenant pas compte de la durée de montée en température).

Pour ce faire, on place la suspension d'hydrogel précédemment obtenue directement dans un réacteur en titane clos. Le réacteur en titane est alors disposé dans un four à la température de 243°C pendant 6 heures.

Après refroidissement jusqu'à la température ambiante, le réacteur est ouvert et la suspension obtenue est centrifugée. Après centrifugation, on récupère une composition talqueuse hybride organique-inorganique.

On soumet ensuite la composition talqueuse hybride récupérée à deux cycles successifs de lavage à l'eau déminéralisée et centrifugation.

La composition talqueuse récupérée après centrifugation est finalement séchée à l'étuve à 60°C pendant 12 h.

Le diffractogramme des rayons X de la composition de talc ainsi obtenue est représenté sur la figure 5. Le diffractogramme des rayons X de cette composition talqueuse présente des raies de diffraction correspondant aux raies de diffraction d'un phyllosilicate fonctionnalisé, et en particulier les raies de diffraction caractéristiques suivantes :

- un plan (001) situé à une distance de 13,298 Å (I =96) ;
- un plan (020) situé à une distance de 4,558 Å (I =100);
- un plan (003) situé à une distance de 3,485 Å (I =79);
- un plan (060) situé à une distance de 1,523 Å (I =49).

Dans les particules de talc hybride organique-inorganique de la composition ainsi préparée, 20 % des atomes de silicium sont porteurs d'un groupement propyl-3-butyl-imidazolium.

EXEMPLE 3 :

On prépare un hydrogel fonctionnalisé :
On prépare d'une part une solution d'acétate de magnésium en ajoutant 30,24 g d'acétate de magnésium tétrahydraté ($Mg(CH_3COO)_2$, $4H_2O$), dans 94,00 mL d'acide acétique $CH_3COOH$ à 1 mol/L.

D'autre part, on prépare une solution d'alcoxysilane fonctionnalisé et de métasilicate de sodium :
Une solution de métasilicate de sodium est d'abord préparée en ajoutant 31,83 g de métasilicate de sodium pentahydraté dans 200 mL d'eau distillée. La solution est légèrement chauffée jusqu'à 40°C pour améliorer la dissolution.

Une solution d'alcoxysilane fonctionnalisé est préparée en ajoutant 10,534 g de chlorure de 1-(triméthoxy-silyl-propyl)-3-méthyl-imidazolium dans 50 mL d'eau distillée.

Le chlorure de 1-(triméthoxy-silyl-propyl)-3-méthyl-imidazolium a pour formule chimique développée la formule suivante :

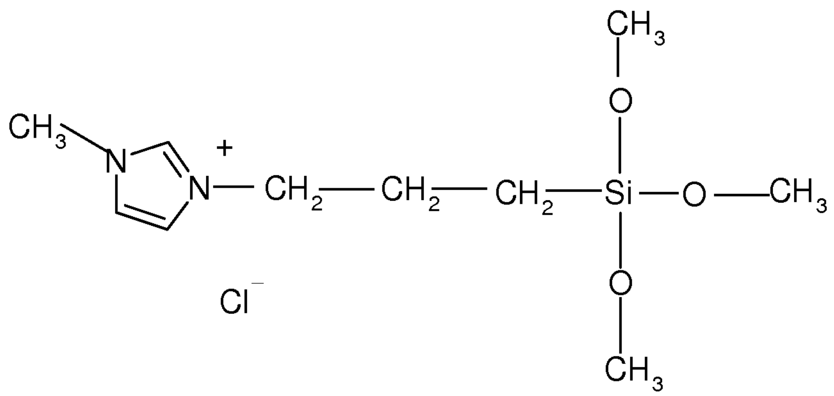

On y ajoute ensuite sous agitation magnétique une solution contenant 5,62 g d'iodure de sodium NaI dans 10 mL d'eau distillée, de façon à réaliser un échange entre les ions chlorure $Cl^-$ et iodure $I^-$. On maintient la solution d'alcoxysilane fonctionnalisé avec l'iodure de sodium NaI sous agitation magnétique pendant 1 minute.

La solution d'alcoxysilane fonctionnalisé ainsi préparée est alors entièrement ajoutée sous agitation magnétique à la solution de métasilicate de sodium précédemment préparée.

Finalement, on ajoute sous agitation magnétique la solution d'acétate de magnésium à la solution contenant l'alcoxysilane fonctionnalisé et le métasilicate de sodium. Un gel silico-métallique se forme instantanément. Ce gel silico-métallique est agité pendant 5 minutes puis centrifugé pendant 5 minutes à 3 500 tours/min. Il est ensuite lavé trois fois par ajout de 100 mL d'eau distillée et centrifugation (5 minutes à 3500 tours/min) de façon à éliminer les sels formés au cours de la précipitation.

Le gel silico-métallique récupéré est ensuite séché par lyophilisation à -50°C sous 0,064 mbar. Après séchage par lyophilisation, une poudre blanche est récupérée. On récupère alors 16,60 g d'une composition comprenant des particules synthétiques fonctionnalisées.

On réalise ensuite un traitement hydrothermal de l'hydrogel ainsi préparé et obtenu à une température de 243°C pendant 6 heures (durée ne tenant pas compte de la durée de montée en température). Le traitement hydrothermal est réalisé en présence d'une concentration en acétate de sodium de 4 mol/L de façon à accélérer la réaction de transformation des particules d'hydrogel en particules talqueuses hybrides organiques-inorganiques.

Pour ce faire, on place la suspension d'hydrogel précédemment obtenue directement dans un réacteur en titane clos. Le réacteur en titane est alors disposé dans un four à la température de 243°C pendant 6 heures.

Après refroidissement jusqu'à la température ambiante, le réacteur est ouvert et la suspension obtenue est centrifugée. Après centrifugation, on récupère d'une part une composition talqueuse hybride organique-inorganique, et d'autre part, une solution surnageante comprenant notamment de l'acétate de sodium, ce dernier pouvant alors être récupéré et éventuellement recyclé.

On soumet ensuite la composition talqueuse hybride récupérée à deux cycles successifs de lavage à l'eau déminéralisée et centrifugation.

La composition talqueuse récupérée après centrifugation est finalement séchée à l'étuve à 60°C pendant 12 h.

Dans les particules de talc hybride organique-inorganique de la composition ainsi préparée 20 % des atomes de silicium sont porteurs d'un groupement propyl-3-méthyl-imidazolium.

Le diffractogramme des rayons X de la composition de talc ainsi obtenue est représenté sur la figure 6. Le diffractogramme des rayons X de cette composition talqueuse présente des raies de diffraction correspondant aux raies de diffraction du talc, et en particulier les raies de diffraction caractéristiques suivantes :

- un plan (001) situé à une distance de 13,118 Å (I =99) ;
- un plan (020) situé à une distance de 4,476 Å (I =100);
- un plan (003) situé à une distance de 3,252 Å (I =65);
- un plan (060) situé à une distance de 1,516 Å (I =50).

Le spectre en RMN du proton (figure 7) des particules minérales hybrides permet d'identifier la présence des H des groupements Mg(OH) des feuillets de talc (déplacements chimiques compris entre 0 et 1 ppm), des groupements $CH_2$-Si (déplacements chimiques compris entre 0,5 ppm et 1 ppm), les H du cycle de l'imidazolium (déplacements chimiques compris entre 6 ppm et 9 ppm), les H des groupements Si-OH et/ou $CH_2$-C (déplacements chimiques compris entre 1 et 3 ppm) et les H des $CH_2$ directement voisin du groupement imidazolium et/ou de l'eau (déplacements chimiques compris entre 3 et 5 ppm).
Le spectre en RMN du carbone (figure 8) des particules minérales hybrides permet d'identifier la présence d'un groupement imidazolium (déplacements chimiques compris entre 115 ppm et 140 ppm) ainsi que la présence d'un groupement méthyle et de groupements méthylène (déplacements chimiques compris entre 0 ppm et 60 ppm, dont le méthylène de la liaison $CH_2$-Si entre 9 ppm et 10 ppm).
Le spectre en RMN du silicium (figure 9) des particules minérales hybrides permet d'identifier la présence de groupements Si-O-Si (déplacements chimiques compris entre -80 ppm et -100 ppm). Les particules minérales fonctionnalisées d'une composition selon l'invention peuvent être utilisées en tant que liquide ionique supporté (SIL) par exemple dans le domaine de la catalyse.

## Revendications

1. Procédé de préparation d'une composition comprenant des particules minérales silico/germano-métalliques fonctionnalisées par au moins un groupement organique, lesdites particules comprenant au moins un atome de silicium (Si) et/ou au moins un atome de germanium (Ge) et au moins un atome d'un métal (M) choisi dans le groupe formé des métaux alcalins, des métaux alcalino-terreux et des métaux de transition, dans lequel :

   - on réalise un traitement hydrothermal sous pression d'un hydrogel précurseur desdites particules minérales silico/germano-métalliques,

   **caractérisé en ce que** :

   - on prépare un hydrogel précurseur comprenant des particules silico/germano-métalliques présentant au moins un groupement organique en réalisant une réaction de co-précipitation en milieu aqueux entre :

     • au moins un sel métallique dudit métal (M),
     • au moins une source de silicium et/ou de germanium, et
     • au moins un composé choisi parmi les oxysilanes et les oxygermanes solubles dans l'eau et ayant pour formule (I):

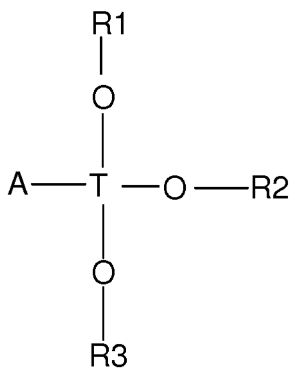

(I),

   dans laquelle :

   - T est choisi parmi le silicium et le germanium,
   - R1, R2 et R3 sont identiques ou différents, et choisis parmi un hydrogène et les groupements alkyles linéaires comprenant 1 à 3 atome(s) de carbone, et
   - A est choisi parmi les groupements aliphatiques, les groupements aromatiques et les groupements hydrocarbonés comprenant au moins un hétéroatome,

ledit sel métallique, ladite source de silicium et/ou de germanium et ledit composé choisi parmi les oxysilanes et les oxygermanes solubles dans l'eau étant mis en présence de façon à ce que le pourcentage atomique d'oxysilane et/ou d'oxygermane par rapport au nombre de mole total de silicium et/ou de germanium est compris entre 0,1 % et 75 %.

**2.** Procédé selon la revendication 1, **caractérisé en ce qu'**on réalise ledit traitement hydrothermal en présence d'au moins un sel carboxylate de formule R8-COOM' dans laquelle :

- M' désigne un métal choisi dans le groupe formé de Na et K, et
- R8 est choisi parmi H et les groupements alkyles comprenant moins de 5 atomes de carbone.

**3.** Procédé selon l'une des revendications 1 ou 2, **caractérisé en ce qu'**on réalise ledit traitement hydrothermal pendant une durée comprise entre 1 seconde et 30 jours.

**4.** Procédé selon l'une des revendications 1 à 3, **caractérisé en ce qu'**on réalise ledit traitement hydrothermal à une pression comprise entre 0,5 MPa et 20 MPa.

**5.** Procédé selon l'une des revendications 1 à 4, **caractérisé en ce qu'**on réalise ledit traitement hydrothermal dudit hydrogel précurseur à une température comprise entre 150°C et 300°C.

**6.** Procédé selon l'une des revendications 1 à 5, **caractérisé en ce que** ledit hydrogel a pour formule :

$$((Si_yGe_{1-y})_x((Si_zGe_{1-z})\text{-}A)_{1-x})_4\ M_3\ O_{11},\ n'H_2O$$

dans laquelle :

- Si désigne le silicium,
- Ge désigne le germanium,
- x est un nombre réel de l'intervalle [0,25 ; 1[,
- y est un nombre réel de l'intervalle [0 ; 1],
- z est un nombre réel de l'intervalle [0 ; 1],
- M désigne l'atome métallique,
- n' est relatif à un nombre de molécule(s) d'eau associée(s) audit hydrogel.

**7.** Procédé selon l'une des revendications 1 à 6, **caractérisé en ce que** le groupement A a pour formule (II) :

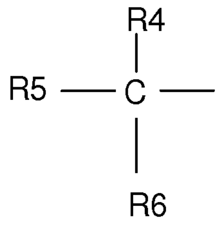

(II),

dans laquelle :
R4, R5 et R6 sont identiques ou différents, et choisis parmi H et les groupements hydrocarbonés comprenant au moins un hétéroatome.

**8.** Procédé selon l'une des revendications 1 à 7, **caractérisé en ce que** le groupement A est choisi parmi un méthyle et les groupements hydrocarbonés de formule $Q\text{-}[CH_2]_n\text{-}$ dans laquelle :

- Q est un groupement comprenant au moins un atome d'azote,
- n est un nombre entier compris entre 3 et 11.

**9.** Procédé selon la revendication 8, **caractérisé en ce que** Q est choisi parmi $H_2N$-, les groupements hydrosolubles cycliques cationiques comprenant au moins un hétéroatome, et

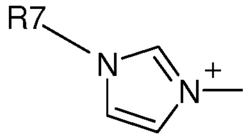

$X^-$ ,

dans laquelle :

- R7 est choisi parmi les alkyles linéaires et ramifiés comprenant 1 à 18 atome(s) de carbone,
- $X^-$ est un anion dans lequel X est choisi parmi le chlore, l'iode et le brome.

**10.** Procédé selon la revendication 9, **caractérisé en ce qu'**on réalise un échange au moins partiel de l'anion $X^-$ par au moins une espèce anionique choisie parmi un anion chlorure, un anion iodure, un anion bromure, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$ ou encore un anion nitrite $NO_2^-$.

**11.** Composition susceptible d'être obtenue par un procédé selon l'une des revendications 1 à 10, **caractérisée en ce qu'**elle comprend des particules minérales silico/germano-métalliques fonctionnalisées dont 1 % à 75 % des atomes de silicium et/ou des atomes de germanium sont liés de façon covalente à au moins un groupement organique, dans laquelle lesdites particules minérales silico/germano-métalliques fonctionnalisées ont pour formule :

$$((Si_yGe_{1-y})_x((Si_zGe_{1-z})\text{-}A)_{1-x})_4\ M_3O_{10}(OH)_2,$$

dans laquelle :

- Si désigne le silicium,
- Ge désigne le germanium,
- x est un nombre réel de l'intervalle [0,25 ; 1[,
- y est un nombre réel de l'intervalle [0 ; 1],
- z est un nombre réel de l'intervalle [0 ; 1],
- M désigne un atome métallique,
- A est choisi parmi les groupements hydrocarbonés comprenant au moins un hétéroatome, A étant un groupement de formule $Q\text{-}[CH_2]_n\text{-}$ dans laquelle :
- n est un nombre entier compris entre 3 et 11,
- Q est un groupement comprenant au moins un cation imidazolium et de formule (III) ci-après :

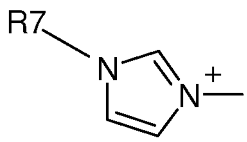

$X^-$ (III),

dans laquelle :

- R7 est choisi parmi les alkyles linéaires et ramifiés comprenant 1 à 18 atome(s) de carbone,

$X^-$ est un anion choisi parmi un anion chlorure, un anion iodure, un anion bromure, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$

ou encore un anion nitrite $NO_2^-$.

**12.** Composition selon la revendication 11, **caractérisée en ce que** le groupement A a pour formule :

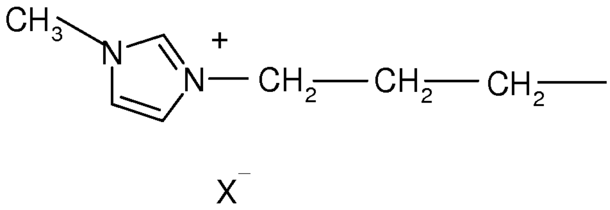

,

$X^-$ étant un anion choisi parmi un anion chlorure, un anion iodure, un anion bromure, un anion fluorosulfonate, un anion bis(fluorosulfonyl)amidure, un anion bis(trifluorométhanesulfonyl)amidure, un anion trifluorométhanesulfonate, un anion hexafluorophosphate, un anion tétrafluoroborate, un anion acétate, un anion nitrate $NO_3^-$ ou encore un anion nitrite $NO_2^-$.

## Patentansprüche

**1.** Verfahren zum Herstellen einer Zusammensetzung aufweisend mineralische Silico/Germano-Metallpartikeln, die durch mindestens eine organische Gruppe funktionalisiert sind, wobei die Partikeln mindestens ein Siliziumatom (Si) und/oder mindestens ein Germaniumatom (Ge) und mindestens ein Metallatom (M) aufweisen, wobei das Metallatom ausgewählt ist aus der Gruppe von Alkalimetallen, Erdalkalimetallen und Übergangsmetallen, wobei:

- eine hydrothermische Behandlung unter Druck eines Hydrogel-Vorläufers der mineralischen Silico/Germano-Metallpartikeln durchgeführt wird,

**dadurch gekennzeichnet, dass**:

- ein Hydrogel-Vorläufer aufweisend mineralische Silico/Germano-Metallpartikeln mit mindestens einer organischen Gruppe bereitgestellt wird, mittels einer Co-Fällungsreaktion in wässrigem Medium zwischen:

  • mindestens einem Metallsalz des Metalls (M),
  • mindestens einer Silizium- und/oder Germanium-Quelle, und
  • mindestens einer Verbindung ausgewählt aus Oxisilanen und Oxi-Germanium, die wasserlöslich sind und die Formel (I) aufweisen:

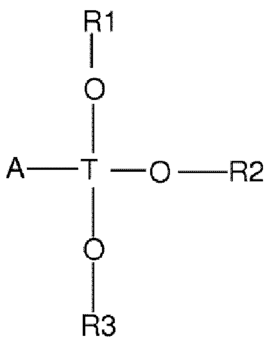

(I)

wobei:

- T ausgewählt ist aus Silizium und Germanium,
- R1, R2, R3 gleich oder unterschiedlich sind und ausgewählt aus Wasserstoff und linearen Alkylgruppen mit 1 bis 3 Kohlenstoffatom(en) sind, und
- A ausgewählt ist aus aliphatischen Gruppen, aromatischen Gruppen und Kohlenwasserstoffgruppen mit mindestens einem Heteroatom,

wobei das Metallsalz, die Silizium- und/oder Germanium-Quelle und die Verbindung ausgewählt aus wasserlöslichen Oxisilanen und Oxi-Germanium zusammen gesetzt sind derart, dass der atomare Prozentgehalt in Oxisilan und/oder Oxi-Germanium bezogen auf die gesamte Molzahl des Siliziums und/oder Germaniums zwischen 0,1 % und 75 % liegt.

2. Verfahren nach Anspruch 1, **dadurch gekennzeichnet, dass** die hydrothermische Behandlung in Gegenwart von mindestens einem Carboxylatsalz der Formel R8-COOM' durchgeführt wird, wobei:

- M' ein Metall darstellt, das ausgewählt ist aus der Gruppe bestehend aus Na und K, und
- R8 ausgewählt ist aus H und Alkylgruppen aufweisend weniger als 5 Kohlenstoffatome.

3. Verfahren nach einem der Ansprüche 1 oder 2, **dadurch gekennzeichnet, dass** die hydrothermische Behandlung während eines Zeitraums zwischen 1 Sekunde und 30 Tagen durchgeführt wird.

4. Verfahren nach einem der Ansprüche 1 bis 3, **dadurch gekennzeichnet, dass** die hydrothermische Behandlung bei einem Druck zwischen 0,5 MPa und 20 MPa durchgeführt wird.

5. Verfahren nach einem der Ansprüche 1 bis 4, **dadurch gekennzeichnet, dass** die hydrothermische Behandlung bei einer Temperatur zwischen 150 °C und 300 °C durchgeführt wird.

6. Verfahren nach einem der Ansprüche 1 bis 5, **dadurch gekennzeichnet, dass** das Hydrogel die Formel aufweist:

$$((Si_yGe_{1-y})_x((Si_zGe_{1-z})\text{-}A)_{1-x})_4M_3O_{11},\ n'H_2O$$

wobei

- Si Silizium darstellt,
- Ge Germanium darstellt,
- x eine reelle Zahl in dem Intervall [0,25 ; 1] ist,
- y eine reelle Zahl in dem Intervall [0 ; 1] ist,
- z eine reelle Zahl in dem Intervall [0 ; 1] ist,
- M das Metallatom darstellt,
- n' eine Anzahl von Wassermolekül (en) verbunden mit dem Hydrogel darstellt.

7. Verfahren nach einem der Ansprüche 1 bis 6, **dadurch gekennzeichnet, dass** die Gruppe A die Formel (II) aufweist:

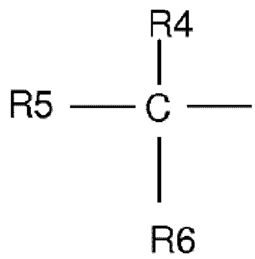
(II)

wobei:
R4, R5 und R6 gleich oder unterschiedlich sind, und ausgewählt sind aus H und Kohlenwasserstoffgruppen aufweisend mindestens ein Heteroatom.

8. Verfahren nach einem der Ansprüche 1 bis 7, **dadurch gekennzeichnet, dass** die Gruppe A ausgewählt ist aus Methyl und Kohlenwasserstoffgruppen der Formel $Q\text{-}[CH_2]_n\text{-}$, wobei:

- Q eine Gruppe aufweisend mindestens ein Stickstoffatom ist,
- n eine ganze Zahl zwischen 3 und 11 ist.

9. Verfahren nach Anspruch 8, **dadurch gekennzeichnet, dass** Q ausgewählt ist aus $H_2N$-, wasserlöslichen, zyklischen, kationischen Gruppen aufweisend mindestens ein Heteroatom und

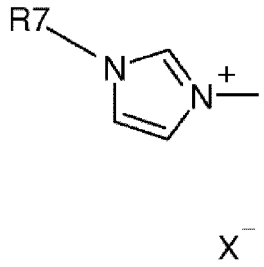

wobei

- R7 ausgewählt ist aus linearen und verzweigten Alkylgruppen mit 1 bis 18 Atom (en),
- $X^-$ ein Anion ist, wobei X ausgewählt ist aus Chlor, Iod und Brom.

10. Verfahren gemäß Anspruch 9, **dadurch gekennzeichnet, dass** ein zumindest teilweise Austausch des Anions $X^-$ durch mindestens eine anionische Spezies ausgewählt aus Chlorid-Anion, Iodid-Anion, Bromid-Anion, Fluorsulfonat-Anion, Bis(fluorosulfonyl)amid-Anion), Bis(trifluoromethanesulfonyl)amid-Anion, Trifluormethansulfonat-Anion, Hexafluorphosphat-Anion, Tetrafluorborat-Anion, Acetat-Anion, Nitrat-Anion $NO_3^-$ oder Nitrit-Anion $NO_2^-$ durchgeführt wird.

11. Zusammensetzung hergestellt durch ein Verfahren nach einem der Ansprüche 1 bis 10, **dadurch gekennzeichnet, dass** sie funktionalisierte, mineralische Silico/Germano-Metallpartikeln enthält, bei denen 1 % bis 75 % der Silizium- und/oder Germaniumatome an mindestens eine organische Gruppe kovalent gebundenen sind, wobei die funktionalisierten, mineralischen Silico/Germano-Metallpartikeln die Formel aufweisen:

$$((Si_yGe_{1-y})_x((Si_zGe_{1-z})\text{-}A)_{1-x})_4M_3O_{10}(OH)_2$$

wobei

- Si Silizium darstellt,
- Ge Germanium darstellt,
- x eine reelle Zahl in dem Intervall [0,25 ; 1] ist,
- y eine reelle Zahl in dem Intervall [0 ; 1] ist,
- z eine reelle Zahl in dem Intervall [0 ; 1] ist,
- M das Metallatom darstellt,
- A ausgewählt ist aus Kohlenwasserstoffgruppen aufweisend mindestens ein Heteroatom, wobei A eine Gruppe der Formel $Q\text{-}[CH_2]_n\text{-}$ ist, wobei
- n eine ganze Zahl zwischen 3 und 11 ist,
- Q eine Gruppe ist aufweisend mindestens ein Imidazolium-Kation und mit der folgenden Formel (III):

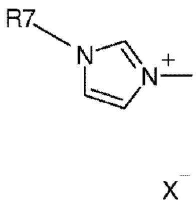

(III)

wobei:

- R7 ausgewählt ist aus linearen und verzweigten Alkylgruppen mit 1 bis 18 Kohlenstoffatom(en),
- $X^-$ ein Anion ist, ausgewählt aus Chlorid-Anion, Iodid-Anion, Bromid-Anion, Fluorsulfonat-Anion, Bis(fluorosulfonyl)amid-Anion, Bis(trifluoromethanesulfonyl)amid-Anion, Trifluormethansulfonat-Anion, Hexafluorphosphat-Anion, Tetrafluorborat-Anion, Acetat-Anion, Nitrat-Anion $NO_3^-$oder Nitrit-Anion $NO_2^-$.

**12.** Zusammensetzung nach Anspruch 11, **dadurch gekennzeichnet, dass** die Gruppe A die Formel aufweist:

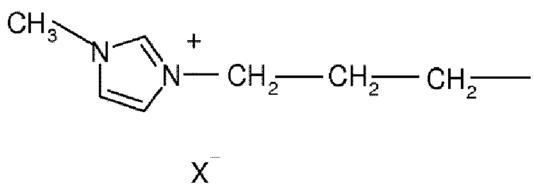

wobei $X^-$ ein Anion ist, ausgewählt aus Chlorid-Anion, Iodid-Anion, Bromid-Anion, Fluorsulfonat-Anion, Bis(fluorosulfonyl)amid-Anion, Bis(trifluoromethanesulfonyl)amid-Anion, Trifluormethansulfonat-Anion, Hexafluorphosphat-Anion, Tetrafluorborat-Anion, Acetat-Anion, Nitrat-Anion $NO_3^-$oder Nitrit-Anion $NO_2^-$.

## Claims

**1.** Method for preparing a composition comprising silico/germano-metallic mineral particles functionalised with at least one organic group, said particles comprising at least one silicon atom (Si) and/or at least one germanium atom (Ge) and at least one atom of a metal (M) selected from the group consisting of alkali metals, alkaline earth metals and transition metals, wherein:

- hydrothermal treatment is carried out under pressure of a hydrogel precursor of said silico/germano-metallic mineral particles, **characterised in that**:
- a precursor hydrogel comprising silico/germano-metallic particles having at least one organic group is prepared by carrying out a co-precipitation reaction in an aqueous medium between:

  • at least one metallic salt of said metal (M),
  • at least one source of silicon and/or germanium, and
  • at least one compound selected from water-soluble oxysilanes and oxygermanes and having formula (I):

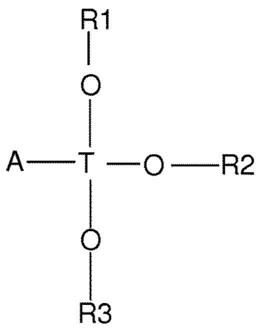

(I),

in which:

- T is selected from silicon and germanium,
- R1, R2 and R3 are identical or different, and selected from hydrogen and linear alkyl groups comprising 1 to 3 carbon atoms, and
- A is selected from aliphatic groups, aromatic groups and hydrocarbon groups comprising at least one heteroatom,

said metallic salt, said source of silicon and/or germanium and said compound selected from water-soluble oxysilanes and oxygermanes brought together such that the atomic percentage of oxysilane and/or oxygermane with respect to the total number of moles of silicon and/or germanium is between 0.1% and 75%.

**2.** Method according to claim 1, **characterised in that** said hydrothermal treatment is carried out in the presence of at least one carboxylate salt having the formula R8-COOM' in which:

- M' refers to a metal selected in the group formed by Na and K, and

- R8 is selected from H and the alkyl groups comprising less than 5 atoms of carbon.

3. Method according to one of the claims 1 or 2, **characterised in that** said hydrothermal treatment is carried out for a period ranging between 1 second and 30 days.

4. Method according to one of the claims 1 to 3, **characterised in that** said hydrothermal treatment is carried out at a pressure ranging between 0.5 MPa and 20 MPa.

5. Method according to one of the claims 1 to 4, **characterised in that** said hydrothermal treatment of said precursor hydrogel is carried out at a temperature ranging between 150°C and 300°C.

6. Method according to one of the claims 1 to 5, **characterised in that** said hydrogel has the formula:

$$((Si_yGe_{1-y})_x((Si_zGe_{1-z})\text{-}A)_{1-x})_4M_3O_{11},n'H_2O,$$

in which:

- Si refers to silicon,
- Ge refers to germanium,
- x is an actual number of the range [0.25; 1],
- y is an actual number of the range [0; 1],
- z is an actual number of the range [0; 1],
- M refers to the metallic atom,
- n' relates to a number of water molecule(s) associated with said hydrogel.

7. Method according to one of the claims 1 to 6, **characterised in that** the group A has formula (II):

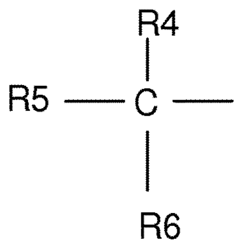

(II),

in which:
R4, R5 and R6 are the same or different and are selected from H and hydrocarbon groups comprising at least one heteroatom.

8. Method according to one of the claims 1 to 7, **characterised in that** group A is chosen from a methyl and hydrocarbon groups of the formula $Q\text{-}[CH_2]_n\text{-}$ in which:

- Q is a group comprising at least one nitrogen atom,
- n is a whole number between 3 and 11.

9. Method according to claim 8, **characterised in that** Q is selected from $H_2N$-, the cationic, cyclical, hydrosoluble groups comprising at least one heteroatom, and

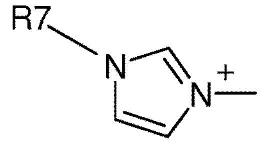

$X^-$ ,

in which:

- R7 is selected from linear and ramified alkyls comprising 1 to 18 carbon atom(s),
- $X^-$ is an anion in which X is selected from chlorine, iodine and bromine.

**10.** Method according to claim 9, **characterised in that** an at least partial exchange of anion X takes place with at least one anionic species selected from a chloride anion, an iodide anion, a bromide anion, a fluorosulfonate anion, a bis(fluorosulfonyl)amide anion, a bis(trifluoromethanesulfonyl)amide anion, a trifluoromethanesulfonate anion, a hexafluorophosphate anion, a tetrafluoroborate anion, an acetate anion, a nitrate anion $NO_3^-$ or even a nitrite anion $NO_2^-$.

**11.** Composition obtainable using a method according to one of the claims 1 to 10, **characterised in that** it comprises functionalised silico/germano-metallic mineral particles, of which 1% to 75% of the silicon atoms and/or germanium atoms are covalently bonded to at least one organic group, in which said functionalised silico/germano-metallic mineral particles have the formula:

$$((Si_yGe_{1-y})_x((Si_zGe_{1-z})\text{-}A)_{1-x})_4M_3O_{10}(OH)_2,$$

in which:

- Si refers to silicon,
- Ge refers to germanium,
- x is an actual number of the range [0.25; 1],
- y is an actual number of the range [0; 1],
- z is an actual number of the range [0; 1],
- M refers to a metallic atom,
- A is chosen from hydrocarbon groups comprising at least one heteroatom, A being a group of the formula $Q\text{-}[CH_2]_n\text{-}$ in which:
- n is a whole number ranging between 3 and 11,
- Q is a group comprising at least one imidazolium cation having the following formula (III):

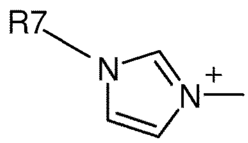

$X^-$ (III),

in which

- R7 is selected from linear and ramified alkyls comprising 1 to 18 carbon atom(s),

$X^-$ is an anion selected from a chloride anion, an iodine anion and a bromine anion, a fluorosulfonate anion, a bis(fluorosulfonyl)amide anion, a bis(trifluoromethanesulfonyl)amide anion, a trifluoromethanesulfonate anion, a hexafluorophosphate anion, a tetrafluoroborate anion, an acetate anion, a nitrate anion $NO_3^-$ or even a nitrite anion

$NO_2^-$.

**12.** Composition according to claim 11, **characterised in that** group A formula is as follows:

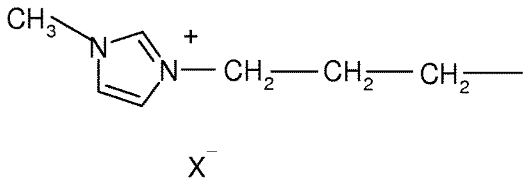

$X^-$ being an anion selected from a chloride anion, an iodine anion and a bromine anion, a fluorosulfonate anion, a bis(fluorosulfonyl)amide anion, a bis(trifluoromethanesulfonyl)amide anion, a trifluoromethanesulfonate anion, a hexafluorophosphate anion, a tetrafluoroborate anion, an acetate anion, a nitrate anion $NO_3^-$ or even a nitrite anion $NO_2^-$.

Fig 1

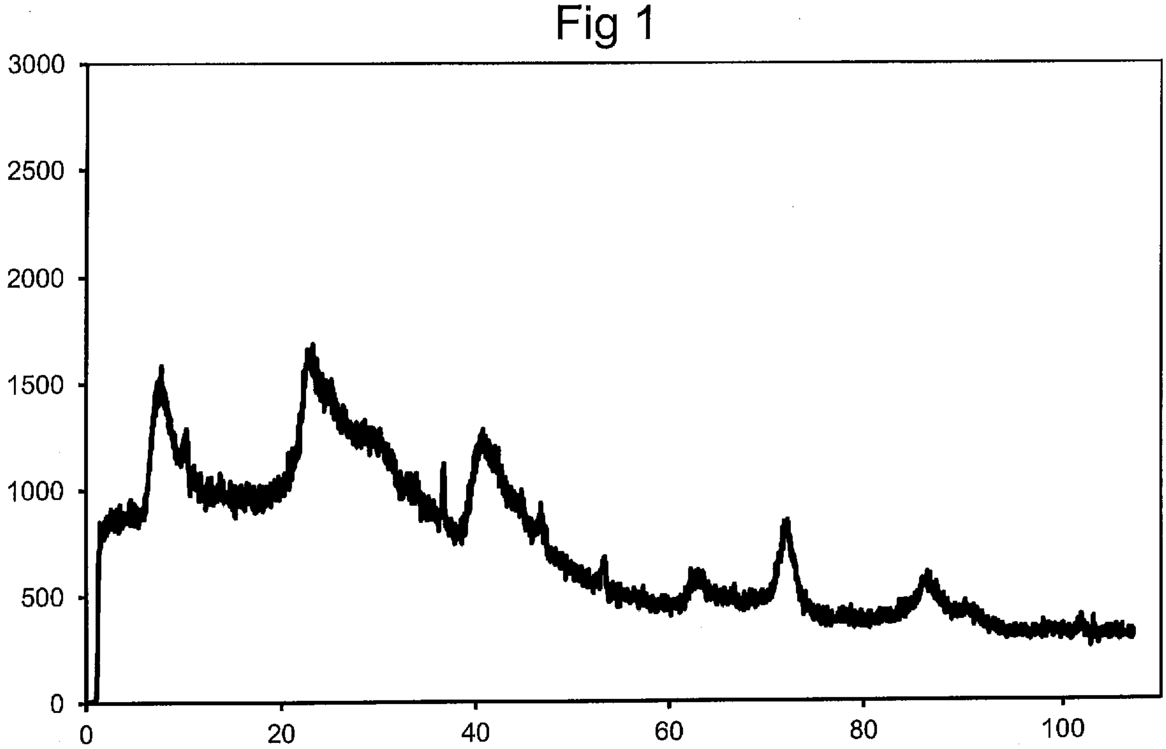


Fig 2

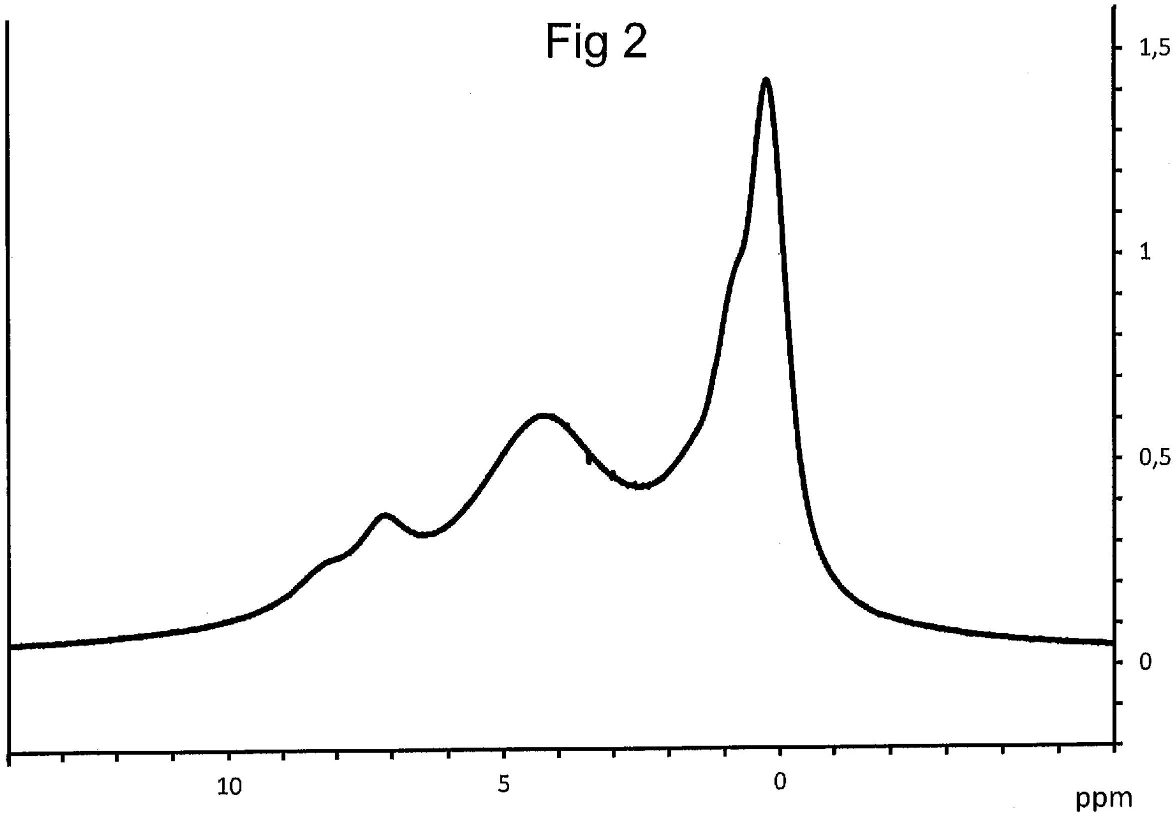

Fig 3

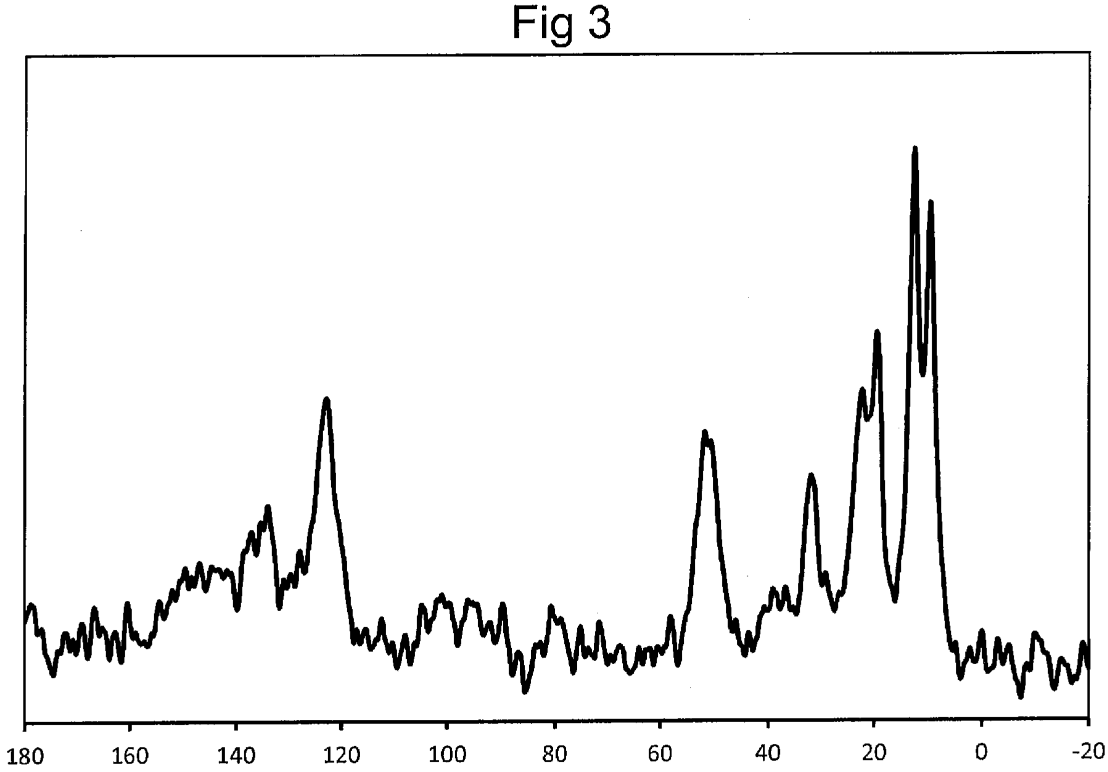
180
160
140
120
100
80
60
40
20
0
-20

Fig 4

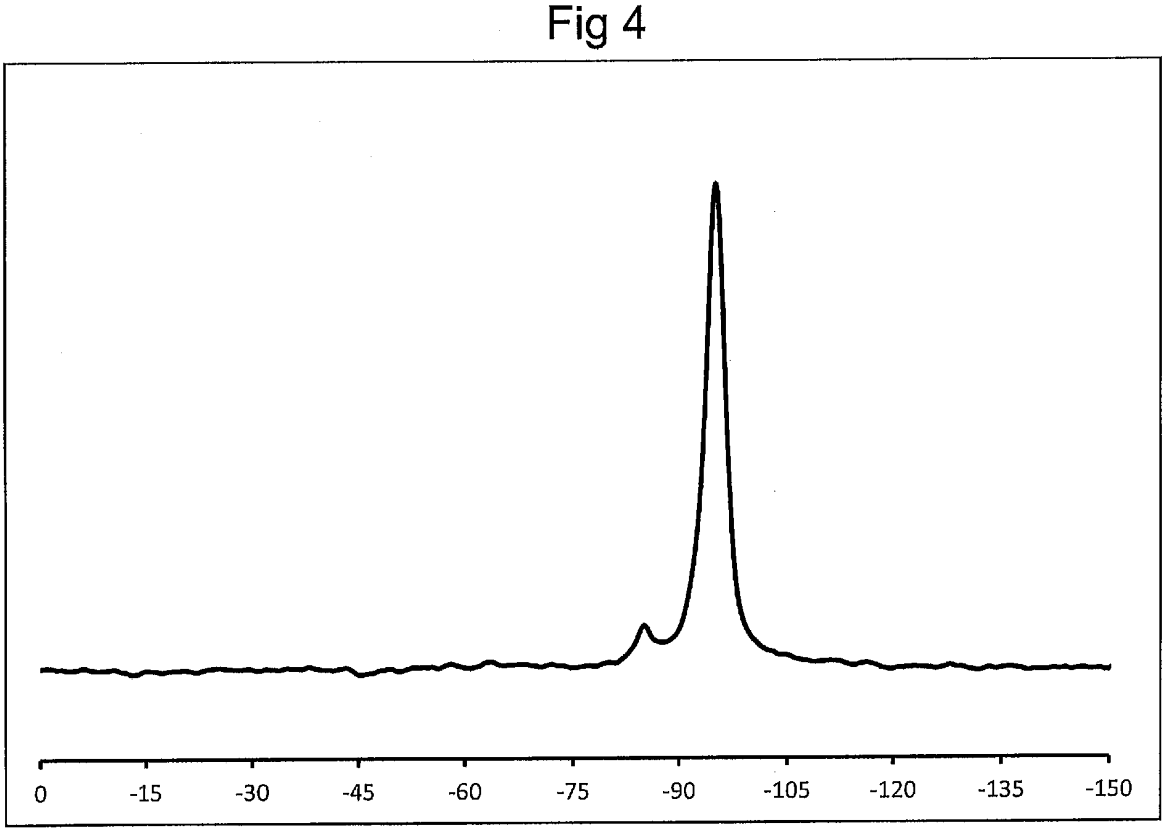
0
-15
-30
-45
-60
-75
-90
-105
-120
-135
-150

Fig 5

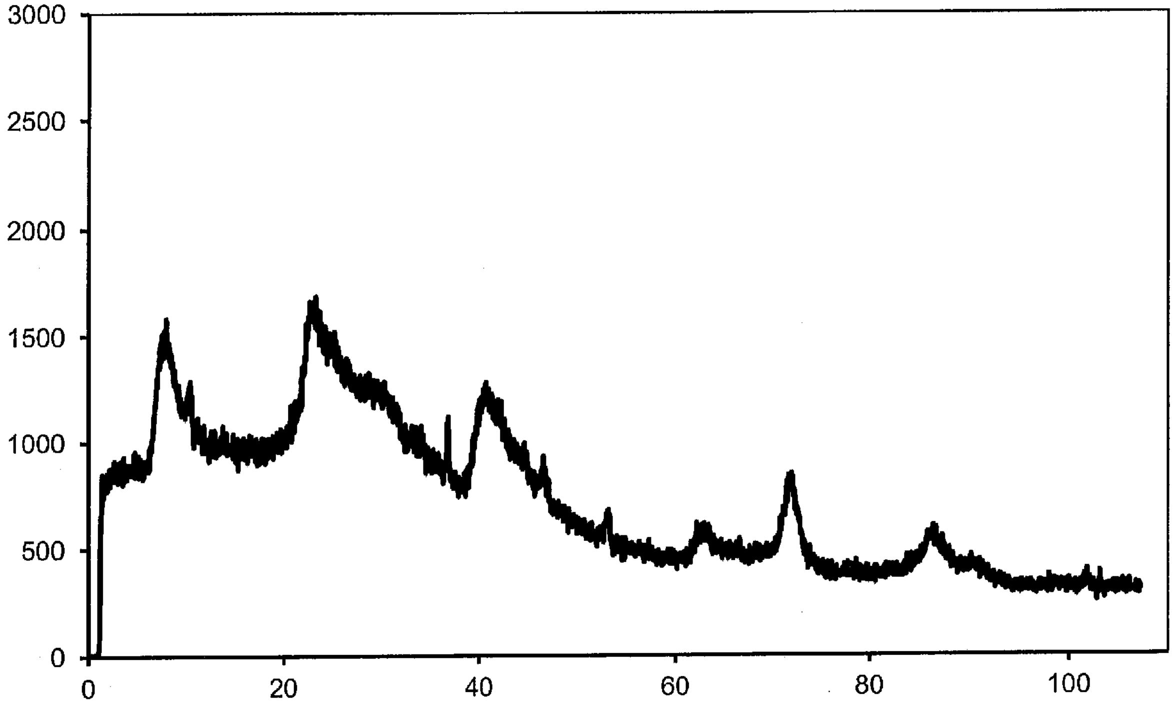
3000
2500
2000
1500
1000
500
0
0
20
40
60
80
100

Fig 6

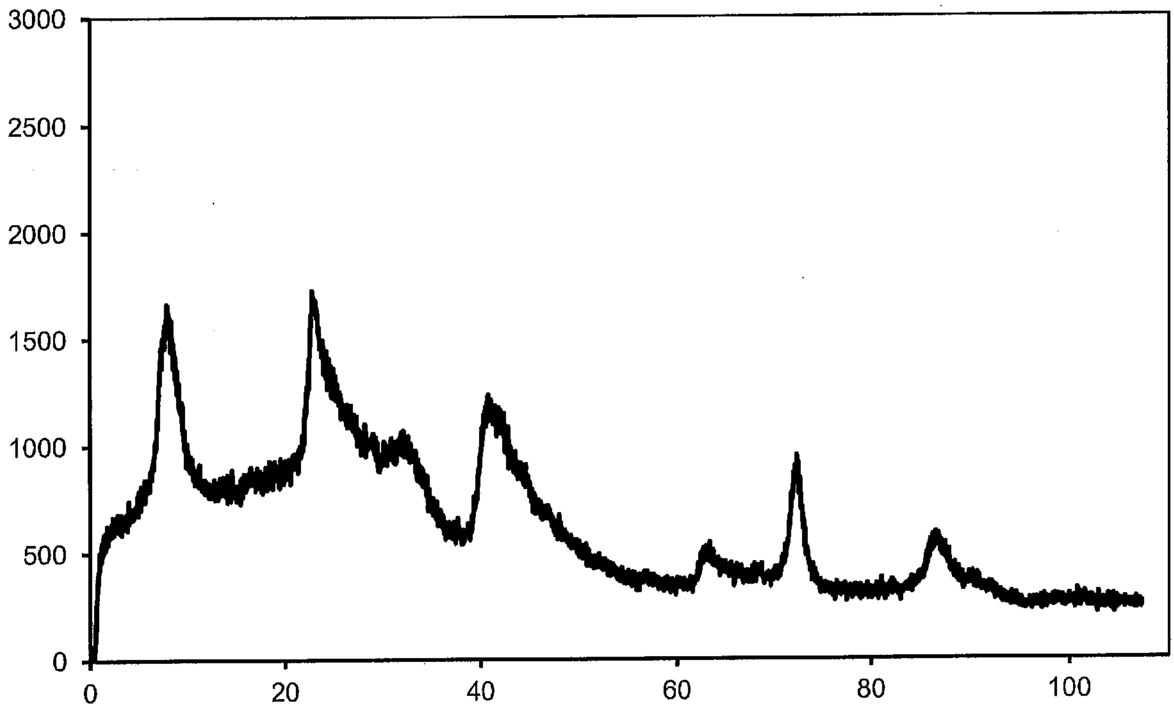
3000
2500
2000
1500
1000
500
0
0
20
40
60
80
100

Fig 7

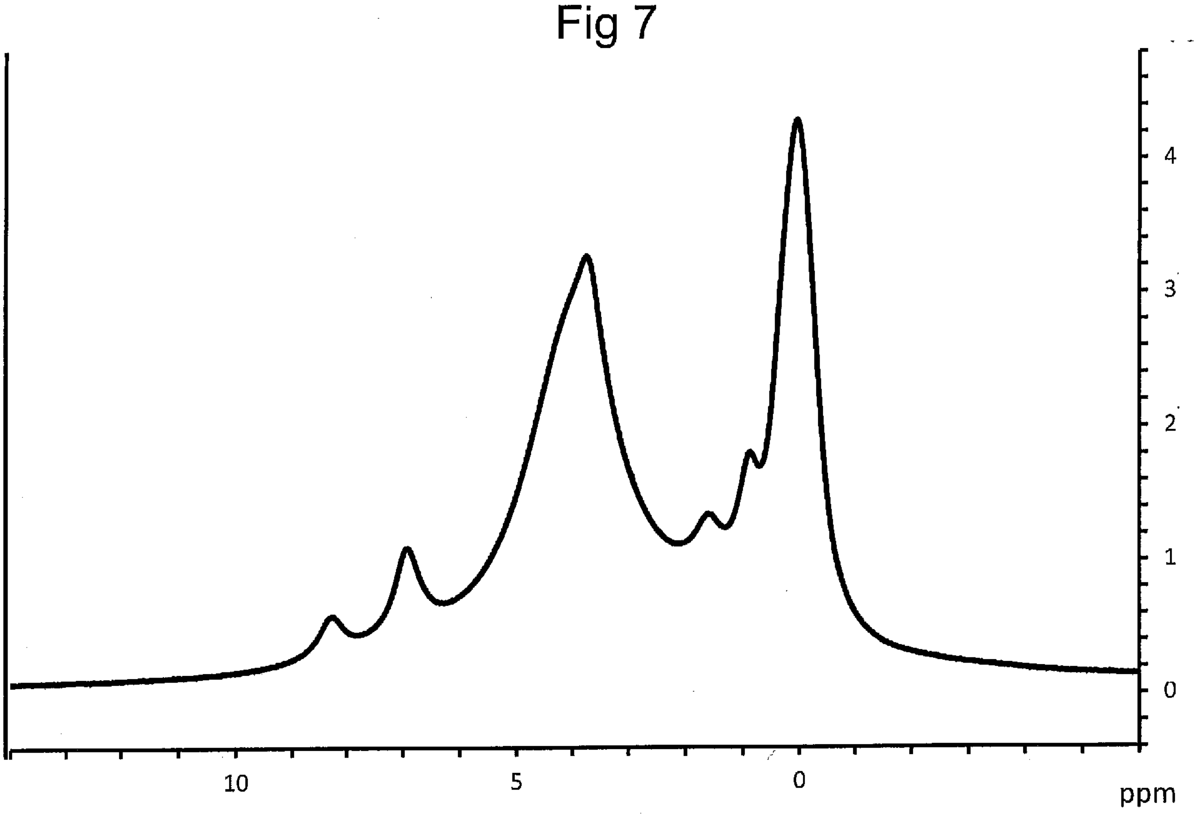


Fig 8

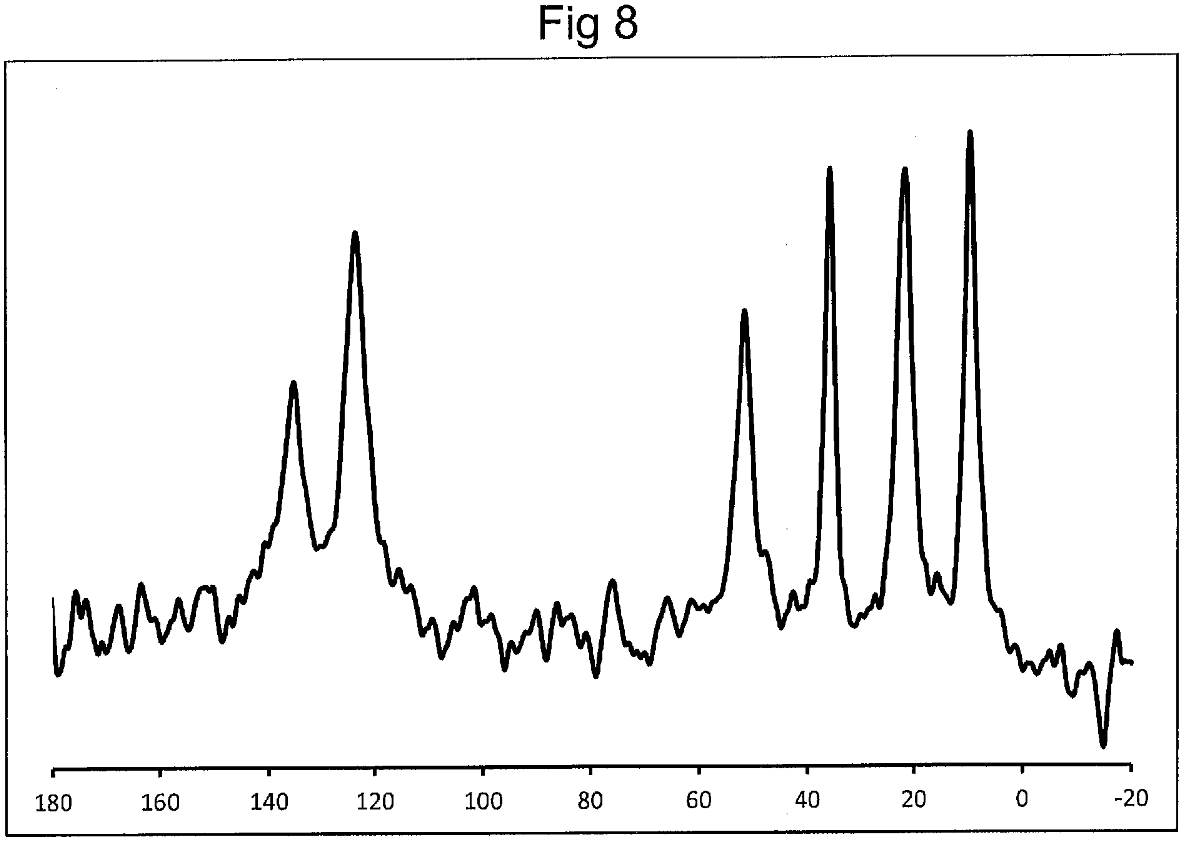

Fig 9

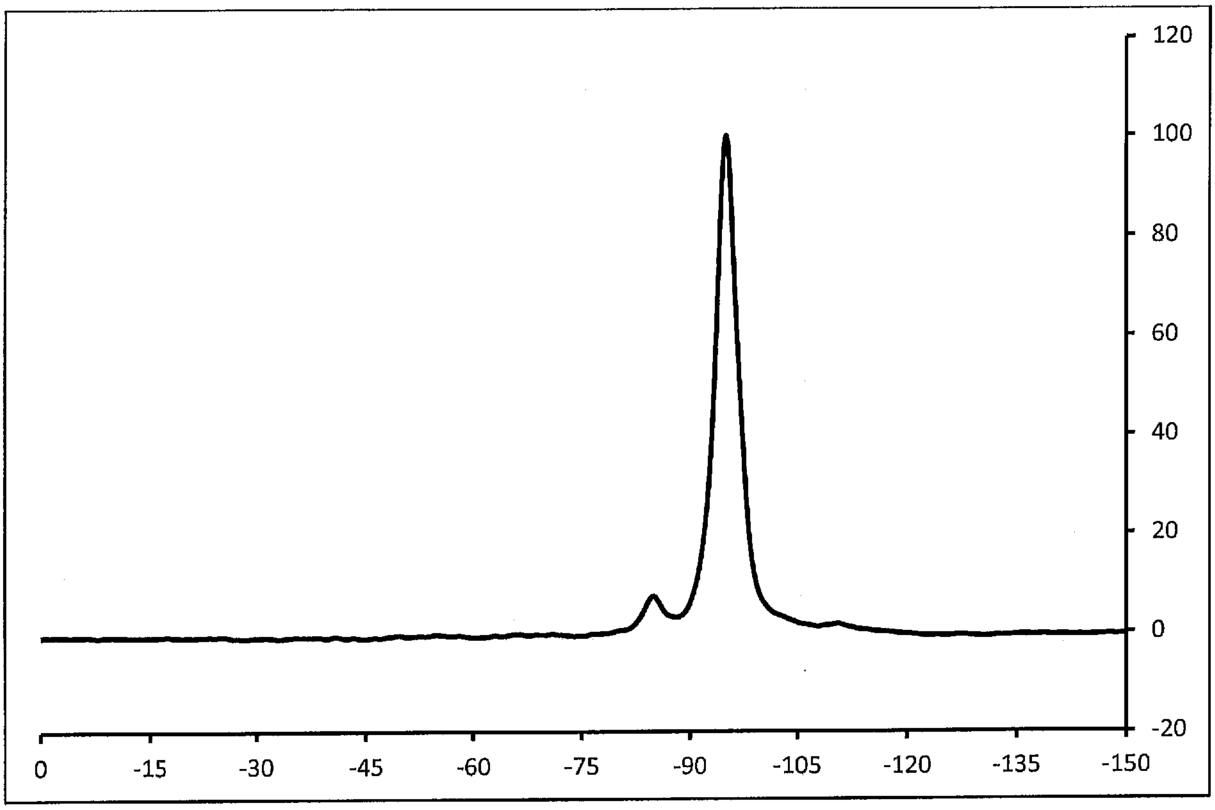

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012085239 A


### Littérature non-brevet citée dans la description


- Some features associated with organosilane groups grafted by the sol-gel process onto synthetic talc-like phyllosilicates. **SALES J A A et al.** JOURNAL OF COLLOID AND INTERFACE SCIENCE. ACADEMIC PRESS, 01 Mai 2006, vol. 297, 95-103
- **ROSS M. ; SMITH W.L. ; ASHTON W.H.** Triclinic talc and associated amphiboles from Gouverneur mining district. American Mineralogist, 1968, vol. 53, 751-769